# EUROPÄISCHE PATENTANMELDUNG

(11) **EP 0 778 064 A2**
(43) Veröffentlichungstag der Anmeldung: **11.06.1997**
(21) Anmeldenummer: 96810824.1
(22) Anmeldetag: 26.11.1996
(51) Int. Cl.: B01D 29/09

(54) **Filtervorrichtung und Filtrationsverfahren**

(30) Priorität: 05.12.1995 CH 3434/95
(71) Anmelder: Novartis AG, 4058 Basel (CH)
(72) Erfinder: Schmidt, Jörg, 79540 Lörrach (DE)

(57) **Zusammenfassung**

Bei einer Filtervorrichtung (10) bzw. einem Filtrationsverfahren zur Trennung von ungelösten Bestandteilen aus einer fliessfähigen Probe wird durch Zurückhalten der ungelösten Bestandteile aus der Probe ein Filtrat erzeugt. Die Filtervorrichtung (10) hat eine Probenzuführung, durch welche die Probe auf ein Filtermittel (7;7a) gelangt, eine Filtratabführung, einen fest montierten ersten Filterzellenteil und einen bewegbaren zweiten Filterzellenteil, zwischen denen sich im Betriebszustand das Filtermittel (7;7a) befindet. Das erste Filterzellenteil ist als Presstisch (4) mit einer Auflagefläche (42) für das Filtermittel (7) ausgestaltet. Das zweite Filterzellenteil ist als Stempel (1) ausgestaltet, der das Filtermittel (7) vor der Kontaktierung durch die Probe gegen den Presstisch (4) drückt und dabei das Filtermittel (7;7a) an der Berührungsfläche zwischen dem Stempel (1), dem Filtermittel (7;7a) und dem Presstisch (4) zumindest partiell sintert.

## Beschreibung

Die Erfindung betrifft eine Filtervorrichtung und ein Filtrationsverfahren zur Trennung von ungelösten Bestandteilen aus einer fliessfähigen Probe gemäss dem jeweiligen Oberbegriff der unabhängigen Patentansprüche. Mit dem Begriff "fliessfähige Probe" werden im folgenden Dispersionen und dispersive Systeme bezeichnet, wobei die kontinuierliche Phase eine Flüssigkeit oder ein Gas sein kann. Die dispergierte Phase kann aus Feststoffteilchen oder aus Flüssigkeitströpfchen bestehen. Als Beispiele für fliessfähige Proben seien hier Suspensionen, Emulsionen, kolloide Lösungen und Aerosole genannt.

Die Filtration ist ein schon sehr lange praktiziertes Trennverfahren, welches in zahlreichen, verschiedenartigsten Gebieten der Technik, wie beispielsweise in der analytischen Chemie, in der medizinischen Diagnostik, in der Prozessmesstechnik oder in der Umweltanalytik eingesetzt wird. Mit diesem Trennverfahren können sowohl Feststoffteilchen aus Flüssigkeiten oder aus Gasen abgetrennt werden, als auch nichtlösliche Flüssigkeitströpfchen aus einer anderen Flüssigkeit oder aus Gasen. Bei der Filtration wird ein poröses Medium, das als Filtermittel bezeichnet wird, von der zu filternden Probe, die flüssig oder gasförmig sein kann, durchströmt, wobei die dispergierte Phase (Feststoffteilchen, Tröpfchen) an der Oberfläche des Filtermittels oder in seinem Innern zurückgehalten wird. Im folgenden werden die Feststoffteilchen, Partikel oder Tröpfchen, welche die dispergierte Phase in der zu filternden Probe bilden, der Einfachheit halber als ungelöste Bestandteile bezeichnet. Die auf bzw. in dem Filtermittel zurückgehaltenen ungelösten Bestandteile werden in ihrer Gesamtheit üblicherweise Filterkuchen genannt.

Auch in der modernen Analytik kommt der Filtration eine ganz entscheidende Rolle zu. So besteht beispielsweise häufig die Notwendigkeit, aus einem laufenden Prozess eine partikelfreie Probe zu entnehmen, um gewisse Parameter des Prozesses zu überwachen und gegebenenfalls zu korrigieren. Dabei soll es vermieden werden, den laufenden Prozess signifikant zu beeinflussen. Als Beispiel sei hier eine biologische Zellkultivierung in einem Bioreaktor genannt. Um die Entwicklung einer gewissen Zellenart zu kontrollieren, wird dem Bioreaktor eine meist kleine Probenmenge entnommen, die in der Regel sowohl Zellen als auch die Nährflüssigkeit enthält und somit eine Zellsuspension darstellt. Nun müssen die Zellen von der Nährflüssigkeit getrennt werden, um die erforderlichen analytischen Messungen durchführen zu können. Diese Trennung erfolgt üblicherweise mittels Filtration, wobei sowohl das Filtrat als auch der Filterkuchen für die folgende Analyse von Interesse sein können.

In *Biotechnology and Bioengineering, Vol. XXVIII,* S. 119-121 *(1986)* beschreiben M. Ghoul *et al.* eine Vorrichtung zur Kontrolle und Optimierung von Fermentationsprozessen. Die Vorrichtung wird speziell dazu verwendet, die Glukosekonzentration in einem Fermentationsgefäss auf einem für das Wachstum von Hefezellen optimalen Wert zu halten. Dazu wird dem Fermentationsgefäss in regelmässigen Abständen eine Probe entnommen, diese auf ihren Glukosegehalt hin untersucht und bei Abweichungen von einem bekannten optimalen Wert die Glukosezufuhr in das Fermentationsgefäss verstärkt bzw. gedrosselt. Den zentralen Teil dieser Vorrichtung bildet eine kontinuierlich arbeitende Filtervorrichtung, mittels derer bei einer entnommenen Probe die Hefezellen von der Nährflüssigkeit separiert werden. Als Filtermittel wird eine Papiermembran verwendet, welche die Form eines dünnen, langen Bandes mit einer Breite von 10 cm hat. Die eigentliche Filterzelle ist zweiteilig ausgestaltet, wobei das Oberteil motorisch auf das Unterteil zu bewegt oder von diesem weg bewegt werden kann. Das Filterband wird zwischen diesen beiden Teilen hindurchgeführt. Für einen Filtrationsprozess wird zunächst die Filterzelle geschlossen, so dass sich ein Teil des Filterbandes zwischen dem Ober- und dem Unterteil der Filterzelle befindet. Nun wird die zu filternde Probe in die Filterzelle eingebracht und senkrecht zur Fläche des Filterbandes durch den in der Filterzelle befindlichen Teil des Filterbandes bewegt. Dabei werden die in der Probe enthaltenen ungelösten Bestandteile, hier also z. B. die Hefezellen, auf bzw. in dem Filterpapier zurückgehalten. Auf der anderen Seite des Filterpapiers tritt das Filtrat als partikelfreie Probe aus und steht für die Analyse bezüglich des Glukosegehalts zur Verfügung. Nun wird durch motorisches Bewegen des Oberteils die Filterzelle geöffnet. Anschliessend wird das Filterband durch einen zweiten Motor in Richtung seiner Längserstreckung transportiert, so dass sich beim folgenden Schliessen der Filterzelle wieder ein noch unbenutzter Teil des Filterbandes in der Filterzelle befindet. Jetzt ist die Vorrichtung für einen weiteren Filtrationsprozess bereit.

Ein grosses und bekanntes Problem, welches bei einer solchen oder ähnlichen Filtervorrichtungen auftritt, ergibt sich aus dem Querfluss der zu filternden Probe auf und in dem porösen Filtermittel. Damit ist gemeint, dass sich die zu filternde Probe nicht nur durch das Filtermittel hindurch bewegt, sondern sich auch auf und in dem Filtermittel senkrecht zu ihrer Hauptbewegungsrichtung ausbreitet. Dies führt dazu, dass der von der Probe kontaktierte Filterbereich nicht kontrollierbar ist. In der vorne beschriebenen Filtervorrichtung kann beispielsweise die zu filternde Probe trotz geschlossener Filterzelle mittels Querfluss auch in das ausserhalb der Filterzelle befindliche Filtermittel vordringen, dieses benetzen bzw. durchdringen und somit für weitere Filtrationsvorgänge unbrauchbar machen. Durch diesen unkontrollierten Querfluss stellen die auf dem Filtermittel aufliegenden Wandungen der Filterzelle keine zuverlässige Dichtung für die Probe dar. Dies ist jedoch aus mehreren Gründen nachteilig.

Zum einen geht durch den Querfluss ein Teil der Probe für die anschliessende Analyse verloren, nämlich derjenige, der sich über den Rand der Filterzelle hinaus in oder auf dem Filtermittel ausbreitet. Um diesen Verlust zu kompensieren, d. h. um noch eine für die Analyse ausreichende Menge an Filtrat zu erzeugen, muss eine grössere Probenmenge aus dem Prozess entnommen werden, wodurch der eigentliche Prozess stärker beeinflusst wird. Ausserdem ist es vor allem bei wertvollen Proben wünschenswert, mit möglichst kleinvolumigen Probenentnahmen aus dem Prozess auszukommen und die für die Analyse notwendigen Probenverluste auf ein Minimum zu reduzieren. Aber auch bei anderen Anwendungen ist dieser durch Querfluss bedingte Probenverlust störend und unerwünscht, beispielsweise, wenn auf einem Filtermittel ein Filterkuchen vorgegebener Dicke aufgebaut werden soll.

Ferner resultiert aus dem Querfluss eine sehr unökonomische Ausnutzung des Filtermittels. Da sich nämlich die Probe bei dem Filtrationsvorgang auch in Bereiche des Filtermittels ausbreitet, welche ausserhalb der Filterzelle liegen, wird deutlich mehr Filtermittel von der Probe kontaktiert als nur der in der Filterzelle befindliche Bereich. Dieses zusätzlich verunreinigte Filtermittel steht somit für weitere Filtrationsvorgänge nicht mehr zur Verfügung. Dies ist besonders bei einem kontinuierlichen Filterbetrieb sehr nachteilig, denn das Filtermittel muss nach einem abgeschlossenen Filtrationsvorgang um ein Strecke weiterbewegt werden, die deutlich grösser ist als der Durchmesser der Filterzelle, damit sichergestellt ist, dass sich bei dem nächsten Filtrationsvorgang nur solches Filtermittel in der Zelle befindet, welches noch keinen Kontakt mit der Probe gehabt hat. Andernfalls besteht nämlich die Gefahr, dass die Analysenergebnisse durch bereits vor dem entsprechenden Filtrationsvorgang in dem Filtermittel befindliche Probenreste verfälscht werden. Zudem ist es meist, wenn überhaupt, nur schwierig festzustellen, wie weit das Filtermittel von der Probe benetzt oder durchdrungen wurde. Auch hierin liegt eine potentielle Gefahr der Verfälschung nachfolgender Analysenergebnisse, weil der als rein angenommene Bereich des Filtermittels in Wirklichkeit schon mit der Probe in Kontakt gekommen war.

Besonders nachteilig ist der Querfluss der Probe auch unter sicherheitstechnischen Aspekten. Beim Arbeiten mit toxischen oder in anderer Weise schädlichen Proben kann nämlich ein unkontrolliertes Austreten der Probe aus der Filterzelle eine erhebliche Gefahr für die Gesundheit und die Umwelt darstellen.

Ausgehend von diesem Stand der Technik ist es deshalb eine Aufgabe der Erfindung, eine Filtervorrichtung und ein Filtrationsverfahren bereitzustellen, bei welchen der unerwünschte und nachteilige Querfluss der Probe auf und in dem Filtermittel effizient unterbunden wird. Weiterhin sollen die Vorrichtung und das Verfahren auch für einen kontinuierlichen Filtrationsbetrieb geeignet sein. Die Filtervorrichtung soll konstruktiv einfach und kostengünstig in der Herstellung sein und sich, ebenso wie das Verfahren, für den Einsatz in einer Vielzahl von Anwendungsgebieten eignen.

Die diese Aufgaben in apparativer und verfahrenstechnischer Hinsicht lösenden Gegenstände der Erfindung sind durch die Merkmale der unabhängigen Patentansprüche gekennzeichnet. Dadurch, dass in der erfindungsgemässen Filtervorrichtung der Stempel das Filtermittel vor der Kontaktierung durch die zu filternde Probe gegen den Presstisch drückt und dabei das Filtermittel an der Berührungsfläche zwischen dem Stempel, dem Filtermittel und dem Presstisch zumindest partiell sintert, ist der Stempel gegenüber dem Presstisch abgedichtet und ein Querfluss der zu filternden Probe auf dem Filtermittel zwischen dem Stempel und dem Presstisch hindurch ist praktisch nicht mehr möglich. Da das Filtermittel durch das Sintern auch in seinem Innern an den druckexponierten Stellen deutlich verdichtet wird, resultiert ferner eine Unterbindung des Querflusses in dem Filtermittel. Mithin kontaktiert die zu filternde Probe im wesentlichen nur einen genau definierten Bereich des Filtermittels, nämlich denjenigen, der zwischen dem Stempel und dem Presstisch eingeklemmt ist. Ein unkontrolliertes Austreten der Probe aus diesem Bereich des Filtermittels mittels Querfliessen wird bei der erfindungsgemässen Filtervorrichtung verhindert. Dies ist besonders vorteilhaft, zum einen, weil keine zusätzlichen Probenverluste durch Querfluss auftreten. Somit wird die dem Filtermittel zugeführte Probe optimal ausgenutzt, und folglich ist die Probenmenge, welche dem Filtermittel zugeführt werden muss, um eine gewünschte Menge und Qualität des Filtrats oder des Filterkuchens zu erzielen, deutlich geringer. Zum anderen bedeutet die Unterbindung des unkontrollierten Austretens der Probe insbesondere beim Arbeiten mit toxischen oder anderen gefährlichen Proben eine deutliche Erhöhung der Betriebssicherheit.

Da erfindungsgemäss der Stempel beweglich angebracht ist, kann er nach dem Filtrationsvorgang von dem Filtermittel weg bewegt werden, wodurch dieses freigegeben wird. Somit eignet sich die erfindungsgemässe Filtervorrichtung insbesondere auch für einen kontinuierlichen Filtrationsbetrieb. Mit der Bezeichnung "kontinuierlicher Filtrationsbetrieb" bzw. "kontinuierliches Filtrationsverfahren" ist gemeint, dass nach einer erfolgten Filtration das Filtermittel freigegeben wird, durch unbenutztes Filtermittel ersetzt wird und dann wieder eine neue Filtration durchgeführt werden kann, so dass einzelne Filtrationen repetitiv nacheinander erfolgen können. Dabei ist es vorteilhaft, wenn das Filtermittel als Filterband ausgestaltet ist. Nach einer erfolgten Filtration kann dann durch ein einfaches Weiterbewegen des Filterbandes bis dahin unbenutztes Filtermittel zwischen dem Stempel und dem Presstisch plaziert weden.

Besonders bevorzugt weist der Stempel auf seiner dem Filtermittel zugewandten Seite eine Kopffläche auf, die durch eine Druckkante begrenzt ist, welche derart über die Kopffläche hinausragt, dass beim Andrücken des Stempels gegen das Filtermittel im wesentlichen nur die Druckkante des Stempels das Filtermittel gegen den Presstisch drückt. Diese Massnahme bringt den Vorteil mit sich, dass die Sinterung und damit die Abdichtung nur an dem Rand des Filterbereiches, der sich zwischen Stempel und Presstisch befindet, also dort, wo sie zur Unterbindung des Querflusses nötig ist, stattfindet. Auf der Innenfläche dieses Filterbereiches erfolgt keine Manipulation und somit auch keine Änderung der filternden Eigenschaften des Filtermittels.

Unter konstruktiven Aspekten ist es günstig, wenn zum einen die Probenzuführung einen Zuführkanal umfasst, welcher als Bohrung im Innern des Stempels ausgestaltet ist, und welcher sich von einer Einlassöffnung für die Probe bis zu einer Mündung in der Kopffläche des Stempels erstreckt, und wenn zum anderen die Filtratabführung einen Abführkanal umfasst, welcher als Bohrung im Innern des Presstisches ausgestaltet ist, und welcher sich von einer Austrittsöffnung für das Filtrat bis zu einer Mündung in der Auflagefläche des Presstisches erstreckt. Dadurch ist es nämlich möglich, dass der Stempel nach der Sinterung auf dem Filtermittel verbleibt und auch der Probenzuführung dient. Somit erfolgt sowohl die Vorbereitung des Filtermittels, nämlich das Sintern, als auch das Aufbringen der Probe auf das Filtermittel mit Hilfe desselben Bauelements, was den konstruktiven Aufwand erheblich reduziert.

Besonders bevorzugt weist die Kopffläche des Stempels Verteilerrinnen auf, welche mit der Mündung des Zuführkanals verbunden sind, so dass sich die zu filternde Probe in den Verteilerrinnen verteilen kann. Dies ist vorteilhaft, weil sich dadurch die zu filternde Probe gleichmässig über den gesamten zwischen Stempel und Presstisch eingeklemmten Filterbereich verteilen kann und somit eine effiziente Ausnutzung des gesamten Filterbereiches gewährleistet ist. Diese Ausgestaltung ist weiterhin vorteilhaft, falls der Filterbereich nach dem Filtervorgang gereinigt bzw. getrocknet bzw. sterilisiert werden soll oder wenn der Filterkuchen durch ein Lösungsmittel von und aus dem Filtermittel gelöst werden soll, um ihn beispielsweise für anschliessende Analysen zu verwenden. Auch die Reinigungs- und Trockenmittel, beispielsweise Wasser und Druckluft, sowie die Sterilisations- und Lösungsmittel können sich durch die Verteilerkanäle problemlos über den gesamten benutzten Filterbereich ausbreiten und diesen gleichmässig durchdringen, so dass die entsprechenden Vorgänge rasch und mit hoher Wirksamkeit durchführbar sind.

In einer bevorzugten Ausführungsform weist die erfindungsgemässe Filtervorrichtung einen, vorzugsweise durch Druckluft, antreibbaren Zylinder auf, welcher den Stempel in Richtung auf den Presstisch zu und von diesem weg bewegt. Diese besonders einfache Konstruktion ist zum einen robust und störunanfällig, und zum anderen eliminiert der Verzicht auf elektrische oder motorische Antriebsmittel die Gefahr von Funkenbildung, wodurch sich eine solche Filtervorrichtung insbesondere auch für den Einsatz in explosionsgefährdeten Bereichen eignet.

Für einen kontinuierlichen Filtrationsbetrieb ist das Filtermittel vorzugsweise als Filterband ausgestaltet, welches auf einer Vorratsrolle aufgewickelt ist. Ferner sind dann vorteilhafterweise Transportmittel für den Bandvorschub vorgesehen, welche das Filterband von der Vorratsrolle abwickeln und zwischen dem Stempel und dem Presstisch hindurch ziehen. Ganz besonders bevorzugt sind die Transportmittel für den Bandvorschub über eine Mechanik derart an den Stempel angekoppelt, dass ein Zubewegen des Stempels auf den Presstisch einen Transport des Filterbandes um eine Strecke, welche mindestens so gross ist wie der Durchmesser der Kopffläche des Stempels, zur Folge hat. Diese konstruktive Massnahme ist besonders vorteilhaft, weil die Bewegung des Stempels gleichzeitig zum Transport des Filterbandes genutzt wird. Somit ist kein Motor oder sonstiges weiteres Antriebsmittel für den Filterbandvorschub vonnöten, wodurch sich der konstruktive Aufwand weiter reduziert. Da der Bandvorschub vollkommen mechanisch ausgestaltet ist, besteht auch hier keine Gefahr von Funkenbildung, was insbesondere für den Einsatz in explosionsgefährdeten Bereichen vorteilhaft ist.

Das erfindungsgemässe Filtrationsverfahren ist durch die Merkmale des unabhängigen Verfahrensanspruchs gekennzeichnet. Dadurch, dass das Filtermittel zumindest partiell gesintert wird unmittelbar bevor die zu filternde Probe auf das Filtermittel aufgebracht wird, wird ein unerwünschtes Querfliessen der Probe auf und in dem Filtermittel wirkungsvoll unterbunden. Dies bringt die bereits vorne im Zusammenhang mit der erfindungsgemässen Filtervorrichtung beschriebenen Vorteile mit sich.

Bevorzugt wird das erfindungsgemässe Filtrationsverfahren als kontinuierliches Filtrationsverfahren durchgeführt. Vorteilhafterweise wird dazu ein Filterband als Filtermittel eingesetzt. Im einzelnen umfasst ein erfindungsgemässes kontinuierliches Filtrationsverfahren zumindest die Durchführung der folgenden Verfahrensschritte. Zunächst wird ein Stempel mit einer dem Filterband zugewandten Kopffläche gegen das Filterband bewegt und das Filterband wird durch den als eine Druckkante ausgeprägten Rand der Kopffläche des Stempels gegen eine Auflagefläche gepresst. Dann wird das Filterband an der Berührungsfläche mit der Druckkante bzw. mit der Auflagefläche zumindest partiell gesintert. Danach wird die zu filternde Probe auf das Filtermittel aufgebracht. Anschliessend wird der Stempel von dem Filterband weg bewegt, so dass das Filterband freigegeben wird. In der Folge wird der Stempel wieder auf das Filterband zubewegt und dabei gleichzeitig das Filterband um eine Strecke weitertransportiert, welche mindestens so gross ist wie der Durchmesser der Kopffläche des Stempels. Nun wird das Filterband wieder zwischen der Druckkante des Stempels und der Auflagefäche eingeklemmt und das Verfahren beginnt von neuem.

Auf diese Weise wird ein kontinuierliches Filtrationsverfahren ermöglicht, welches besonders vorteilhaft für die dauernde und regelmässige Überwachung und Regulierung von verschiedenartigsten Prozessen ist.

Weitere vorteilhafte Massnahmen und bevorzugte Ausgestaltungen der erfindungsgemässen Filtervorrichtung bzw. des erfindungsgemässen Filtrationsverfahrens ergeben sich aus den abhängigen Ansprüchen.

Im folgenden wird die Erfindung sowohl in Bezug auf die verfahrenstechnischen als auch in Bezug auf die apparativen Aspekte anhand von Ausführungsbeispielen und anhand der Zeichnung näher erläutert. In der schematischen nicht massstäblichen Zeichnung zeigen:
- Fig. 1: einen perspektivische Darstellung eines ersten Ausführungsbeispiels der erfindungsgemässen Filtervorrichtung (eine Seitenwand teilweise mit Ausbruch),
- Fig. 2: eine stark schematisierte Schnittdarstellung wesentlicher Teile des ersten Ausführungsbeispiels,
- Fig. 3: einen Längsschnitt durch den Stempel des ersten Ausführungsbeispiels,
- Fig. 4: eine Aufsicht auf die Kopffläche des Stempels des ersten Ausführungsbeispiels,
- Fig. 5: eine Schnitt durch das Ende des Stempels des ersten Ausführungsbeispiels mit der Kopffläche gemäss der Schnittlinie V-V in Fig. 4,
- Fig. 6: eine Aufsicht auf die Auflagefläche des Presstisches des ersten Ausführungsbeispiels,
- Fig. 7: einen Schnitt durch den Presstisch des ersten Ausführungsbeispiels gemäss der Schnittlinie VII-VII in Fig. 6,
- Fig. 8: einen Längsschnitt durch den Stempel eines zweiten Ausführungsbeispiels der erfindungsgemässen Filtervorrichtung,
- Fig. 9: einen Querschitt durch den.Stempel des zweiten Ausführungsbeispiels gemäss der Schnittlinie IX-IX in Fig. 8 und
- Fig. 10: einen Schnitt durch den Presstisch des zweiten Ausführungsbeispiels (zur besseren Orientierung sind das Filterband und die Druckkante angedeutet).

Die erfindungsgemässe Filtervorrichtung zur Trennung von ungelösten Bestandteilen aus einer fliessfähigen Probe erzeugt durch Zurückhalten der ungelösten Bestandteile aus der Probe ein Filtrat. Der Begriff "fliessfähige Probe" ist so zu verstehen, dass er sowohl Flüssigkeiten als auch Gase umfasst. Die in dieser fliessfähigen Probe enthaltenen und üblicherweise dispergierten ungelösten Bestandteile können sowohl Feststoffteilchen als auch nichtlösliche Flüssigkeitströpfchen sein. Beispielsweise kann eine solche fliessfähige Probe eine Zellsuspension sein; die aus ihr zu trennenden ungelösten Bestandteile sind dann die Zellen.

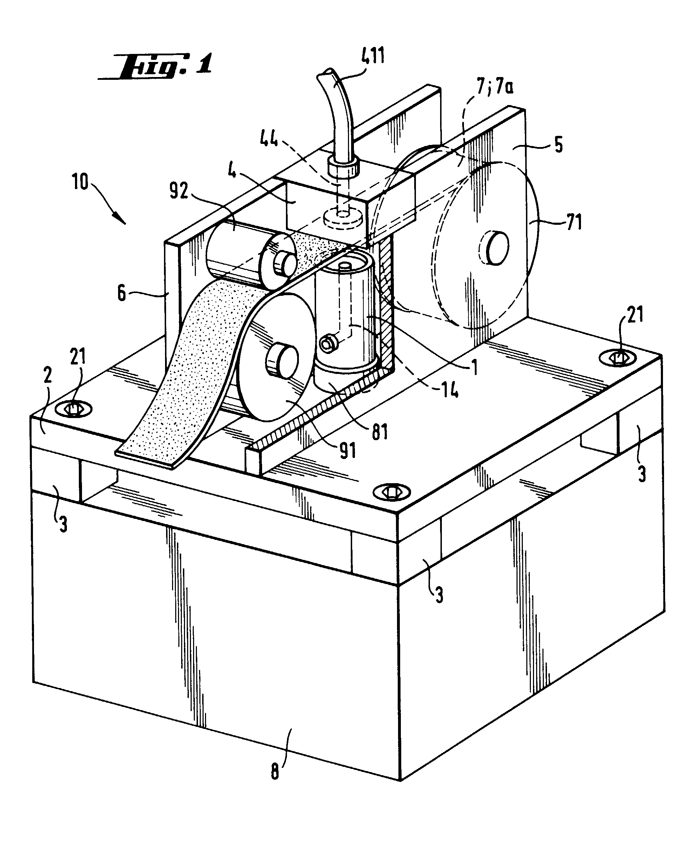

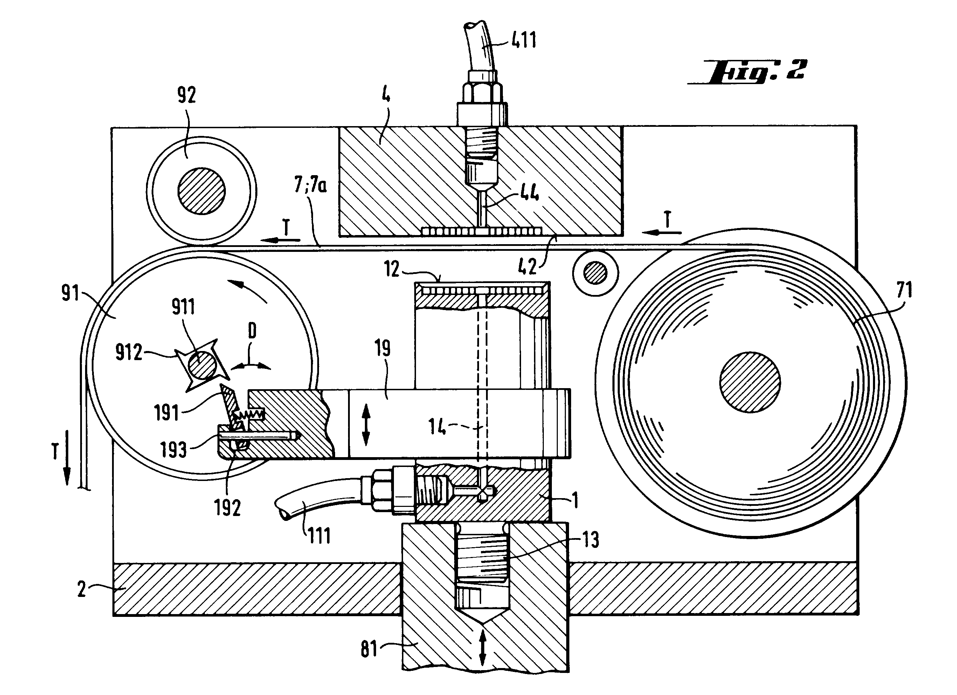

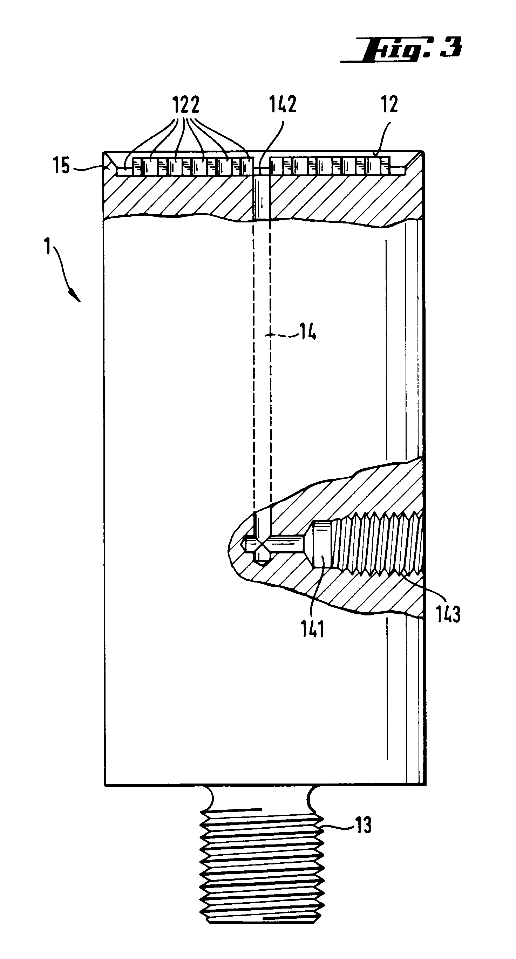

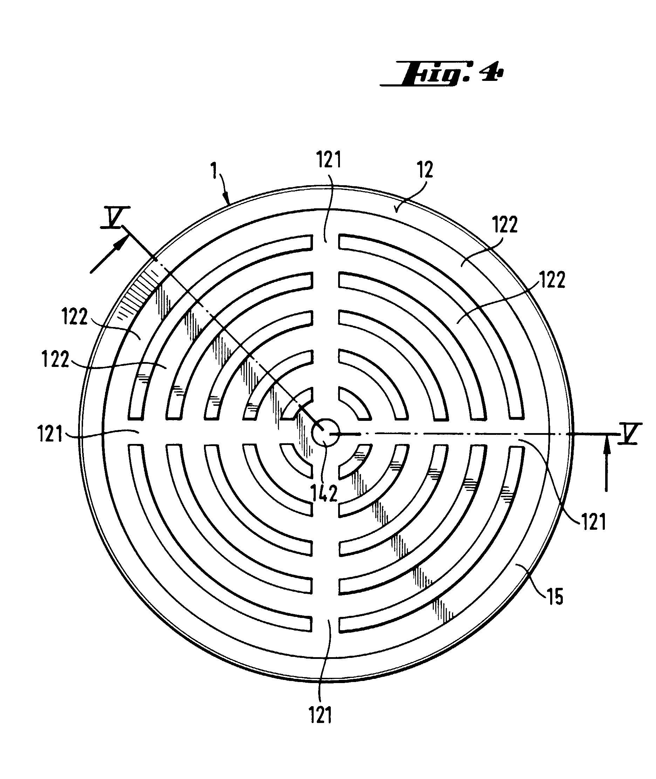

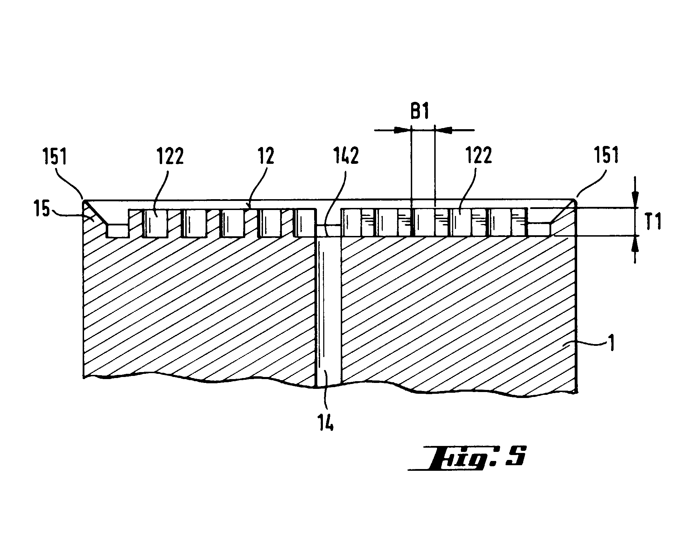

Die erfindungsgemässe Filtervorrichtung umfasst eine Probezuführung, durch welche die Probe auf ein Filtermittel 7 (Fig. 1) gelangt, welches die in der Probe enthaltenen ungelösten Bestandteile zurückhält, und eine Filtratabführung. Ausserdem sind ein fest montierter erster Filterzellenteil und ein bewegbarer zweiter Filterzellenteil vorgesehen, zwischen denen sich im Betriebszustand das Filtermittel 7 befindet. Erfindungsgemäss ist das erste Filterzellenteil als Presstisch 4 mit einer Auflagefläche 42 (Fig. 2) für das Filtermittel 7 ausgestaltet und der zweite Filterzellenteil als Stempel 1, der das Filtermittel 7 vor der Kontaktierung durch die Probe gegen den Presstisch 4 drückt und dabei das Filtermittel 7 an der Berührungsfläche zwischen dem Stempel 1, dem Filtermittel 7 und dem Presstisch 4 zumindest partiell sintert. Dadurch ist der Stempel 1 an seiner Berührungsfläche mit dem Filtermittel 7 gegenüber dem Presstisch 4 zuverlässig abgedichtet. Erst nach dieser Sinterung kontaktiert die fliessfähige Probe das Filtermittel 7 innerhalb des durch den Stempel abgedichteten Bereichs. Somit ist ein Querfluss der Probe auf dem Filtermittel 7 über die von dem Stempel 1 definierte Begrenzung hinaus praktisch nicht mehr möglich. Da das Filtermittel 7 auch in seinem Innern an den druckexponierten Stellen eine deutliche Verdichtung erfährt, wird auch ein Querfliessen der Probe in dem Filtermittel 7 zwischen dem Stempel 1 und dem Presstisch 4 wirkungsvoll unterbunden. Folglich kontaktiert die zu filternde Probe im wesentlichen nur denjenigen, genau definierten Bereich des Filtermittels 7, welcher zwischen dem Stempel 1 und dem Presstisch 4 plaziert ist, und kann nicht in unkontrollierter Weise durch Querfluss aus diesem Bereich ausdringen. Bevorzugterweise ist das Filtermittel 7 als ein Filterband 7a, also in Form eines langen Bandes, ausgestaltet, um einen kontinuierlichen Filtrationsbetrieb zu ermöglichen.

Fig. 1 zeigt in perspektivischer Darstellung ein erstes Ausführungsbeispiel der erfindungsgemässen Filtervorrichtung, welches insbesondere für einen kontinuierlichen Filtrationsbetrieb ausgestaltet ist. Zum besseren Verständnis sind in Fig. 2 wesentliche Teile dieses Ausführungsbeispiels nochmals im Schnitt und stark schematisiert dargestellt. Die Filtervorrichtung ist als Ganzes mit dem Bezugszeichen 10 bezeichnet.

Wie in Fig. 1 dargestellt, umfasst das erste Ausführungsbeispiel der erfindungsgemässen Filtervorrichtung 10 ein quaderförmiges Basiselement 8. Auf dessen Oberfläche befindet sich an jeder der vier Ecken jeweils ein quaderförmiger Abstandsblock 3. Auf den dem Basiselement 8 abgewandten Begrenzungsflächen der vier Abstandsblöcke 3 ist eine Grundplatte 2 befestigt, welche das Basiselement 8 überdeckt. Durch die Abstandsblöcke 3 entsteht zwischen der Grundplatte 2 und dem Basiselement 8 ein Freiraum. Die Befestigung der Grundplatte 2 kann beispielsweise mittels Schrauben 21 oder anderen Befestigungsmitteln erfolgen, die sich durch die Grundplatte 2 und die Abstandsblöcke 3 hindurch bis in das Basiselement 8 erstrecken. Auf der dem Basiselement 8 abgewandten Oberfläche der Grundplatte 2 befinden sich zwei Seitenwände 5 und 6, die ungefähr rechtwinklig auf der Grundplatte 2 stehen und mit dieser fest verbunden sind. In Fig. 1 ist die erste Seitenwand 5 mit einem Ausbruch dargestellt, um den Blick auf den Stempel 1 freizugeben. Die Seitenwände 5 und 6 sind so angeordnet, dass sie zueinander parallel und parallel zu einer Begrenzungskante der Grundplatte 2 verlaufen. Ferner sind die Seitenwände 5 und 6 jeweils von der Begrenzungskante der Grundplatte 2 nach innen eingerückt montiert, so dass ihre in Richtung des Basiselementes 8 gedachte Verlängerung in den Freiraum zwischen Basiselement 8 und Grundplatte 2 fällt. Zwischen den beiden Seitenwänden 5 und 6 befinden sich übereinander (bezüglich der Grundplatte 2) angeordnet eine Transportrolle 91 sowie eine Gegendruckrolle 92, die dem Transport des Filterbandes 7a dienen. In Fig. 2 sind noch weitere Details für den Bandtransport eingezeichnet, auf deren Darstellung aus Gründen der Übersichtlichkeit in Fig. 1 verzichtet wurde. Diese Details werden weiter hinten im Zusammenhang mit dem Bandtransport noch genau erläutert. Die Transportrolle 91 und die Gegendruckrolle 92 sind zueinander achsparallel und jeweils mittels einer Welle drehbar an einer der beiden Seitenwände 5,6 montiert. Das Filterband 7a ist auf einer Vorratsrolle 71 aufgewickelt, die sich ebenfalls zwischen den Seitenwänden 5 und 6 befindet und zwar in der in Fig. 1 gewählten Darstellung hinter der Transportrolle 91 bzw. der Gegendruckrolle 92. Die Vorratsrolle 71 ist mittels einer Welle an einer oder an beiden der Seitenwände 5,6 drehbar gelagert, wobei ihre Drehachse parallel zu den Drehachsen der Transportrolle 91 und der Gegendruckrolle 92 verläuft.

Jede der Seitenwände 5 und 6 ist an ihrem der Grundplatte 2 abgewandten Ende mit einer Ausnehmung versehen, welche sich im Bereich zwischen der Vorratsrolle 71 einerseits und der Transportrolle 91 bzw. der Gegendruckrolle 92 andererseits befindet, so dass die Seitenwände ein U-förmiges Profil aufweisen. Diese Ausnehmungen nehmen den quaderförmigen Presstisch 4 so auf, dass seine Auflagefläche 42 der Grundplatte 2 zugewandt ist. Der Presstisch 4 ist durch nicht dargestellte Befestigungsmittel mechanisch fest mit den Seitenwänden 5 und 6 verbunden. Der zylindrisch ausgestaltete Stempel 1 mit einer Kopffläche 12 befindet sich in dem freien Raum, der durch die Seitenwände 5 und 6, den Presstisch 4, die Vorratsrolle 71, die Transportrolle 91 und die Gegendruckrolle 92 begrenzt ist. Der Stempel 1 ist derart angeordnet, dass seine Längsachse ungefähr senkrecht auf der Grundplatte 2 steht. Der Stempel 1 ist beweglich angebracht. Dazu ist die Grundplatte 2 mit einer Bohrung versehen, durch welche hindurch sich der Stempel 1 erstreckt. Bevorzugt erfolgt die Bewegung des Stempels 1 durch einen antreibbaren Zylinder 81 (Fig. 2), welcher sich bei dem ersten Ausführungsbeispiel in dem Basiselement 8 (Fig. 1) befindet. Wie aus Fig. 2 ersichtlich, ist der Stempel 1 auf seiner dem Presstisch 4 abgewandten Stirnfläche mit einem Gewindeteil 13 versehen, mittels dem er fest mit dem Zylinder 81 verbunden ist. Durch einen Hub des Zylinders 81 bewegt sich der Stempel 1 auf den Presstisch 4 zu und nähert sich mit seiner Kopffläche 12 der Auflagefläche 42 des Presstisches 4. Durch eine entgegengesetzt gerichtete Bewegung des Zylinders 81 bewegt sich der Stempel von dem Presstisch 4 weg. Bevorzugt ist der Zylinder 81, welcher den Stempel 1 bewegt, mechanisch, insbesondere durch Druckluft, antreibbar. Dies ist zum einen konstruktiv besonders einfach und robust und zum anderen eliminiert der Verzicht auf elektrische oder andere motorische Antriebsmittel die Gefahr von Funkenbildung, wodurch sich eine solche Filtervorrichtung insbesondere auch für den Einsatz in explosionsgefährdeten Bereichen eignet.

Das Filterband 7a erstreckt sich von der Vorratsrolle 71 zwischen der Auflagefläche 42 des Presstisches 4 und der Kopffläche 12 des Stempels 1 hindurch und von dort zwischen der Transportrolle 91 und der Gegendruckrolle 92 hindurch. Das Filtermittel 7, welches in dem ersten Ausführungsbeispiel als Filterband 7a ausgestaltet ist, kann beispielsweise aus einer Kompositmembran bestehen, wie sie z. B. unter dem Namen VERSAPOR 1200 von der Firma Gelman Inc. (World Headquarters, 600 South Wagner Road, Ann Arbor, Michigan, USA) vertrieben wird. Ein solches Filterband 7a hat üblicherweise eine Dicke von 0,1 mm bis 0,2 mm. Aber auch andere Materialien, wie beispielsweise Zellulose, Zellulosederivate, Kunststoffe, Gewebe, Vliese aus Metall-, Natur-, Kunst-, oder Glasfasern sind zur Herstellung des Filterbandes 7a geeignet. Filtermittel an sich, die aus solchen oder ähnlichen Materialien hergestellt sind, sind in verschiedenartigsten Ausführungen sehr gut bekannt und bedürfen daher keiner näheren Erläuterung. Für den Fachmann stellt es kein Problem dar, für das jeweilige Anwendungsgebiet der Filtervorrichtung bzw. für die jeweilige zu filternde Probe ein geeignetes Material für das Filtermittel 7 auszuwählen.

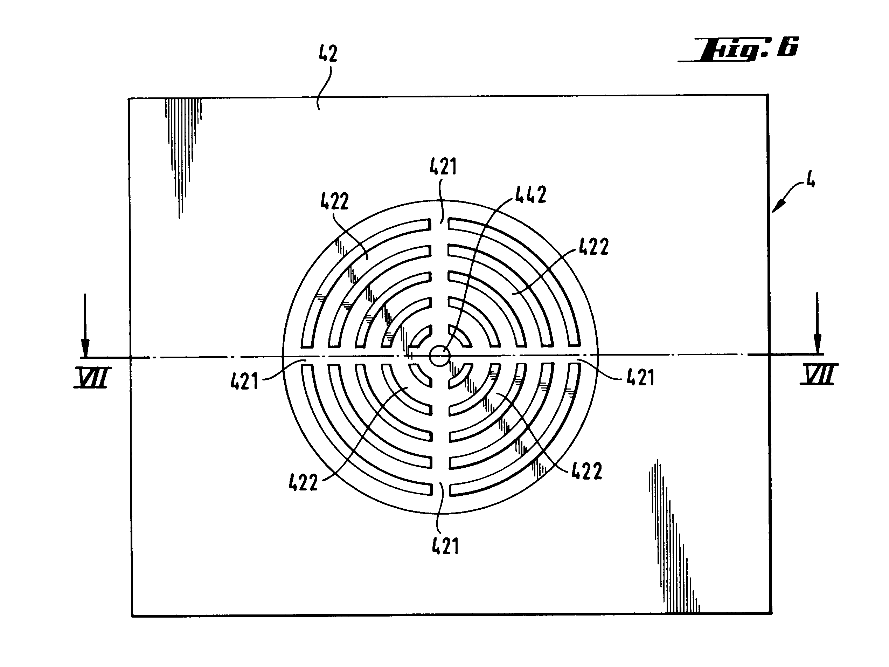

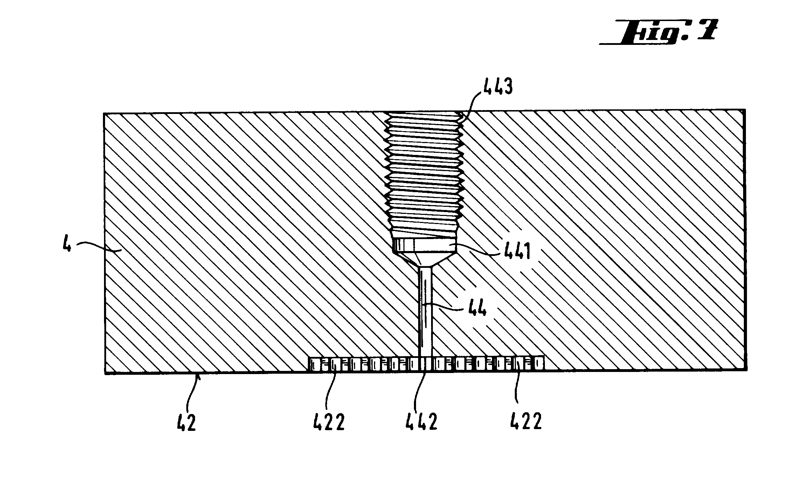

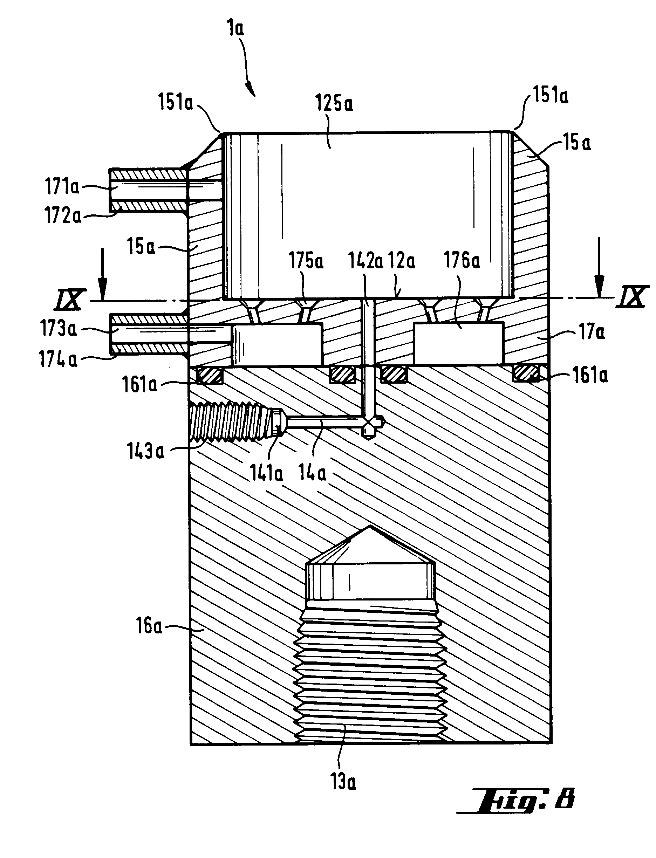

Wie es auch die Darstellung des Stempels 1 in Fig. 3 zeigt, umfasst die Probenzuführung bevorzugterweise einen Zuführkanal 14, welcher als Bohrung im Innern des Stempels 1 ausgestaltet ist, und welcher sich von einer Einlassöffnung 141 für die Probe bis zu einer Mündung 142 in der Kopffläche 12 des Stempels 1 erstreckt. Optional kann die Einlassöffnung 141, wie dies Fig. 3 zeigt, mit einem Gewinde 143 versehen sein, welche das ebenfalls mit einem Gewinde versehene Ende eines Zuführschlauchs 111 (Fig. 2) aufnimmt.

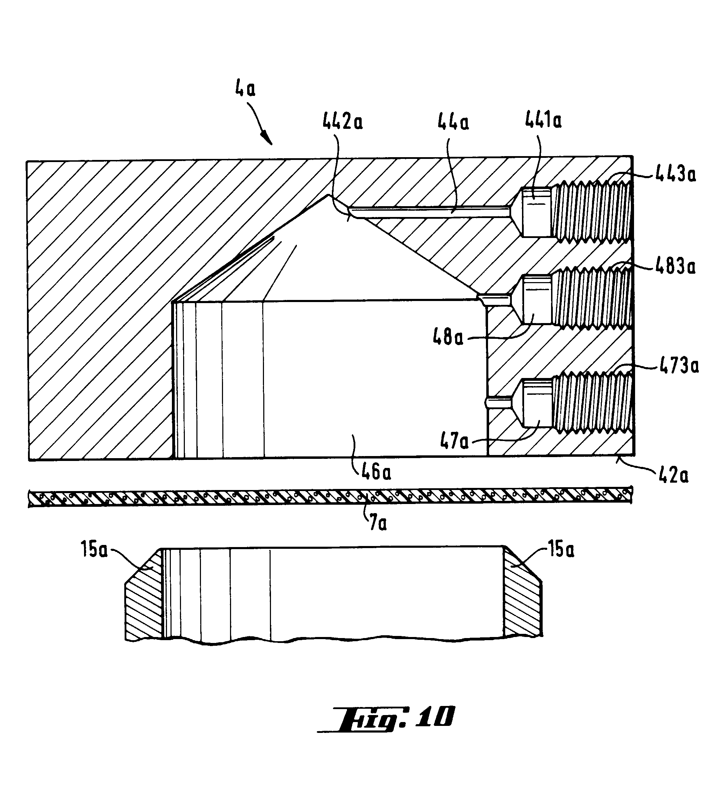

Wie es auch die Darstellung des Presstisches 4 in Fig. 7 zeigt, umfasst die Filtratabführung bevorzugterweise einen Abführkanal 44, welcher als Bohrung im Innern des Presstisches 4 ausgestaltet ist, und welcher sich von einer Austrittsöffnung 441 für das Filtrat bis zu einer Mündung 442 in der Auflagefläche 42 des Presstisches 4 erstreckt. Optional kann die Austrittsöffnung 441, wie dies Fig. 7 zeigt, mit einem Gewinde 443 versehen sein, welche das ebenfalls mit einem Gewinde versehene Ende eines Abführschlauchs 411 (Fig. 1, Fig. 2) aufnimmt.

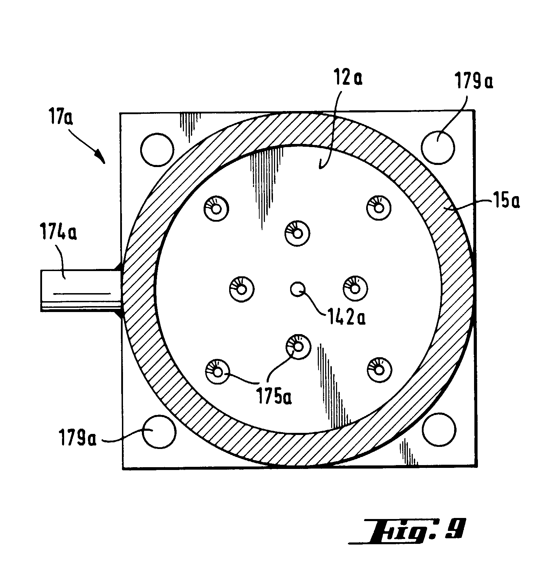

Bezugnehmend auf die Figuren 3, 4 und 5 wird im folgenden eine besonders bevorzugte Ausbildung des Stempels 1 beschrieben, wie sie in dem ersten Ausführungsbeispiel der erfindungsgemässen Filtervorrichtung 10 realisiert ist. Fig. 3 zeigt einen Längsschnitt durch den Stempel 1, der zylindrisch ausgestaltet ist. Die dem Presstisch 4 zugewandte Kopffläche 12 des Stempels 1 ist im wesentlichen kreisförmig ausgestaltet, wie dies die in Fig. 4 dargestellte Aufsicht zeigt. Fig. 5 zeigt das Ende des Stempels 1 mit der Kopffläche 12 in einer Schnittdarstellung gemäss der Linie V-V in Fig. 4. Unter praktischen und konstruktiven Aspekten weist die Kopffläche 12 des Stempels 1 bei dieser Ausbildung bevorzugt einen Durchmesser von bis zu 100 mm, insbesondere von 10 mm bis 30 mm auf. Wie am besten aus Fig. 5 ersichtlich ist, ist der Rand des Stempels 1 an der Kopffläche 12 als eine Druckkante 15 ausgebildet. Diese Druckkante 15 begrenzt die Kopffläche 12 und ragt über diese hinaus. Das hat zur Folge, dass beim Anpressen des Stempels 1 gegen das Filtermittel 7 im wesentlichen nur die Druckkante 15 des Stempels 1 das Filtermittel 7 gegen den Presstisch 4 drückt. Dies ist besonders vorteilhaft, weil die Sinterung und damit die Abdichtung nur an dem Rand desjenigen Filtermittelbereichs erfolgt, der sich zwischen dem Stempel 1 und dem Presstisch 4 befindet. Die Verdichtung des Filtermittels 7 durch Sinterung findet folglich nur dort statt, wo sie zur Abdichtung, also zum Unterbinden des Querflusses der Probe, vonnöten ist. Auf der Innenfläche des genannten Filtermittelbereichs, der später von der zu filternden Probe kontaktiert wird, erfolgt keine Manipulation des Filtermittels 7 und somit auch keine eventuell nachteilige Änderung der filternden Eigenschaften.

Besonders bevorzugt ist die Druckkante 15 an ihrem im Betriebszustand dem Filterband 7a zugewandten Ende 151 spitzwinklig abgeschrägt wie dies beispielsweise in Fig. 5 dargestellt ist. Bei dem ersten Ausführungsbeispiel ist die Druckkante in Richtung der durch sie begrenzten Kopffläche 12, also nach innen bezüglich des Stempels 1 abgeschrägt. Dadurch entsteht das relativ scharfes Ende 151 der Druckkante 15, welches dem Filtermittel 7 zugewandt ist. Die Abschrägung und die Wandung des Stempels 1 schliessen den spitzen Winkel ein, dessen Scheitel auf dem Ende 151 der Druckkante 15 liegt. Das relativ scharfe Ende 151 bringt den Vorteil mit sich, dass sich die auf den Stempel 1 ausgeübte Kraft auf eine sehr kleine Fläche, nämlich das Ende 151 der Druckkante 15, konzentriert und diese somit einen Druck auf das Filtermittel 7 ausübt, der um ein Vielfaches grösser ist, als derjenige Druck mit dem der Zylinder 81 zum Antrieb des Stempels 1 beaufschlagt wird. Folglich reicht ein relativ kleiner Antriebsdruck auf den Zylinder 81 aus, um an dem Ende 151 der Druckkante 15 einen für die Sinterung des Filtemittels ausreichend grossen Druck zu erzeugen. Ein konkretes Zahlenbeispiel wird weiter hinten gegeben. Ein relativ kleiner Antriebsdruck ist aus konstruktiven Gründen und aus Gründen der Betriebssicherheit sehr vorteilhaft. Unter diesem Aspekt der Druckerhöhung an der Druckkante 15 bei einem relativ kleinen Antriebsdruck ist es wünschenswert, die Druckfläche, welche durch das Ende 151 gebildet wird, möglichst klein zu halten. Andererseits darf das Ende 151 der Druckkante 15 aber auch nicht zu scharf ausgestaltet sein, weil sonst die Gefahr besteht, das Filtermittel 7 wesentlich zu schädigen oder sogar ganz durchzutrennen. Aus diesem Grunde wird es ganz besonders bevorzugt, das Ende 151 der Druckkante 15 abzurunden. In der Praxis hat sich für diese Abrundung ein Krümmungsradius von bis zu 0,1 mm, insbesondere von 0,03 mm bis 0.07 mm bewährt.

Weiterhin weist die Kopffläche 12 des Stempels 1 Verteilerrinnen 121 und 122 auf, welche mit der Mündung 142 des Zuführkanals 14 verbunden sind, so dass sich die zu filternde Probe in den Verteilerrinnen 121 und 122 verteilen kann. Bei der kreisförmigen Ausbildung der Kopffläche 12 befindet sich die Mündung 142 des Zuführkanals 14 bevorzugt etwa im Mittelpunkt der Kopffläche 12 und die Verteilerrinnen 121 und 122 in der Kopffläche 12 umfassen bevorzugt sowohl radial verlaufende Verteilerrinnen 121 als auch konzentrisch zum Mittelpunkt angeordnete erste Zwischenrinnen 122, welche kreisbogenförmig ausgestaltet sind und die radial verlaufenden Verteilerrinnen 121 miteinander verbinden. Die radial verlaufenden Verteilerrinnen 121 erstrecken sich von der Mündung 142 des Zuführkanals 14 bis an die Druckkante 15. Bei der in Fig. 4 und Fig. 5 dargestellten Ausbildung sind vier radial verlaufende Verteilerrinnen 121 vorgesehen, die paarweise etwa einen rechten Winkel einschliessen. Die ersten Zwischenrinnen 122 sind jeweils ungefähr in der Form eines Viertelkreises ausgestaltet und verbinden jeweils zwei der radial verlaufenden Verteilerrinnen 121 miteinander. In radialer Richtung sind die konzentrisch liegenden ersten Zwischenrinnen 122 äquidistant angeordnet. Die Verteilerrinnen 121 und 122 sind vorteilhaft, weil sich in ihnen die zu filternde Probe zunächst gleichmässig verteilt und dann in das Filtermittel 7 eindringt. Dadurch verteilt sich die zu filternde Probe gleichmässig über den gesamten zwischen dem Stempel 1 und dem Presstisch 4 eingeklemmten Filterbereich, wodurch eine effiziente und räumlich homogene Ausnutzung dieses gesamten Filterbereichs gewährleistet ist. Um die gleichmässige Verteilung der Probe zu erreichen, haben die Verteilerrinnen 121 und 122 bevorzugt jeweils eine Breite B1 und Tiefe T1 von bis zu 2 mm, insbesondere von 0,8 mm bis 1,2 mm. Natürlich können die Verteilerrinnen 121 und 122 auch einen anderen als den in Fig. 5 dargestellten rechteckigen Querschnitt aufweisen, beispielsweise einen halbkreisförmigen. Auch ist es nicht notwendig, dass die Verteilerrinnen 121 und 122 alle die gleiche Breite B1 oder Tiefe T1 haben. Natürlich ist auch die Anzahl der radial verlaufenden Verteilerrinnen 121 und die Anzahl der ersten Zwischenrinnen 122 in Fig. 4 bzw. Fig. 5 beispielhaft zu verstehen. Bei Durchmessern der Kopffläche 12 von mehr als ungefähr 30 mm kann es beispielsweise vorteilhaft sein, die Anzahl der radial verlaufenden Verteilerrinnen 121 zu erhöhen, und die ersten Zwischenrinnen 122 zum Innern der Kopffläche 12 hin kleiner auszugestalten.

Um die in dem Stempel 1 und besonders in der Druckkante 15 auftretenden Kräfte schadlos aufnehmen zu können, ist der Stempel 1 und insbesondere die Druckkante 15 besonders bevorzugt aus gehärtetem Stahl gefertigt. Zur Härtung des Stahls eignen sich an sich bekannte Verfahren, wie beispielsweise die Nitrierhärtung.

Bezugnehmend auf die Figuren 6 und 7 wird im folgenden eine besonders bevorzugte Ausbildung des Presstisches 4 beschrieben, wie sie in dem ersten Ausführungsbeispiel der erfindungsgemässen Filtervorrichtung 10 realisiert ist. In Fig. 6 ist eine Aufsicht auf die Auflagefläche 42 des Presstisches 4 dargestellt, also auf die Fläche des Presstisches 4, welche im Betriebszustand dem Filtermittel 7 zugewandt ist. Fig. 7 zeigt eine Schnittdarstellung des Presstisches 4 entlang der Schnittlinie VII-VII in Fig. 6. Der Presstisch 4 hat eine quaderförmige Gestalt. Seine im Betriebszustand dem Stempel 1 zugewandte Auflagefläche 42 für das Filtermittel 7 weist Sammelrinnen 421 und 422 auf, welche mit der Mündung 442 des Abführkanals 44 verbunden sind, so dass das Filtrat aus den Sammelrinnen 421 und 422 in den Abführkanal 44 gelangen kann. Ganz besonders bevorzugt sind die Mündung des Abführkanals 44 und die Sammelrinnen 421, 422 in der Auflagefläche 42 des Presstisches 4 spiegelsymmetrisch zur Mündung 142 des Zuführkanals 14 beziehungsweise zu den Verteilerrinnen 121, 122 in der Kopffläche 12 des Stempels 1 angeordnet, so dass im Betriebszustand jeweils eine Sammelrinne 421, 422 auf der einen Seite des Filtermittels 7 einer Verteilerrinne 121, 122 auf der anderen Seite des Filtermittels 7 gegenüberliegt. Bei der besonders bevorzugten kreisförmigen Ausgestaltung der Kopffläche 12 des Stempels 1, wie sie vorne beschrieben wurde, bedeutet dies, dass die Sammelrinnen 421, 422 in der Auflagefläche 42 des Presstisches 4 sowohl radial verlaufende Sammelrinnen 421 als auch konzentrisch zur Mündung 442 des Abführkanals 44 angeordnete zweite Zwischenrinnen 422 umfassen, welche kreisbogenförmig ausgestaltet sind und die radial verlaufenden Sammelrinnen 421 miteinander verbinden. Bei der in Fig. 6 und Fig. 7 dargestellten Ausbildung sind vier radial verlaufende Verteilerrinnen 421 vorgesehen, die paarweise etwa einen rechten Winkel einschliessen. Die zweiten Zwischenrinnen 422 sind jeweils ungefähr in der Form eines Viertelkreises ausgestaltet und verbinden jeweils zwei der radial verlaufenden Sammelrinnen 421 miteinander. In radialer Richtung sind die konzentrisch liegenden zweiten Zwischenrinnen 422 äquidistant angeordnet. Bezüglich der Anordnung, der Ausgestaltung, der Anzahl und der Abmessungen der Sammelrinnen 421 und 422 in der Auflagefläche 42 des Presstisches 4 gelten sinngemäss die gleichen Erläuterungen wie sie weiter vorne für die Verteilerkanäle 121 und 122 in der Kopffläche 12 des Stempels 1 zu finden sind.

Auch der Presstisch 4 und insbesondere die Auflagefläche 42 mit den Sammelrinnen 421 und 422 sind besonders bevorzugt aus gehärtetem Stahl gefertigt. Zur Härtung des Stahls eignen sich an sich bekannte Verfahren, wie beispielsweise die Nitrierhärtung.

Die Ausgestaltung der Kopffläche 12 des Stempels 1 und der Auflagefläche 42 des Presstisches 4 mit den Verteilerrinnen 121,122 beziehungsweise mit den Sammelrinnen 421, 422 ist besonders auch im Hinblick auf die Reduzierung von Totvolumina in der erfindungsgemässen Filtervorrichtung 10 vorteilhaft. Totvolumina können besonders in Ecken und sonstigen schwer zugänglichen Bereichen entstehen, wenn sich dort Probenmaterial oder eingedrungene Luftblasen ansammeln und hängenbleiben. Solche Totvolumina wirken sich auch nachteilig auf die benötigte Filtrations- oder Reinigungszeit aus, weil sie den Vorgang des Filterns bzw. des Reinigens der Filtervorrichtung verlängern. Ferner wirken solche Totvolumina einer effizienten Ausnutzung der zu filternden Probe entgegen und können die für die Filtration benötigte Probenmenge vergrössern. Durch die Verteilerrinnen 121 und 122 wird es aber gewährleistet, dass sich die zu filternde Probe rasch und gleichmässig über den gesamten zur Verfügung stehenden Bereich des Filtermittels 7 verteilt. Analog sorgen die Sammelrinnen 421 und 422 für einen raschen und effizienten Abtransport des Filtrats. Besonders die gekrümmten ersten Zwischenrinnen 122 in der Kopffläche 12 und die ebenfalls gekrümmten zweiten Zwischenrinnen 422 in der Auflagefläche 42 des Presstisches 4 verhindern ein Festsetzen der Probe oder von eventuell eingedrungenen Luftblasen und reduzieren damit mögliche Totvolumina. Dadurch wird eine sehr rasche Filtration und auch Reinigung der Vorrichtung ermöglicht, wodurch sich der Zeitaufwand, beispielsweise für eine Analyse, reduziert. Die effiziente Ausnutzung der zu filternden Probe bzw. die effiziente Sammlung des Filtrats ermöglichen es auch, mit sehr kleinen Probenmengen für die Filtration auszukommen, ohne dass dabei die Qualität des Filtrats oder des Filterkuchens negativ beeinflusst werden.

Wie bereits weiter vorne erwähnt und am besten aus Fig. 1 und Fig. 2 ersichtlich, ist bei dem ersten Ausführungsbeispiel der erfindungsgemässen Filtervorrichtung 10 das Filterband 7a auf der Vorratsrolle 71 aufgewickelt und erstreckt sich von der Vorratsrolle 71 zwischen der Auflagefläche 42 des Presstisches 4 und der Kopffläche 12 des Stempels 1 hindurch und von dort zwischen der Transportrolle 91 und der Gegendruckrolle 92 hindurch. Bei diesem Ausführungsbeispiel sind Transportmittel für den Bandvorschub vorgesehen, welche das Filterband 7a von der Vorratsrolle 71 abwickeln und zwischen dem Stempel 1 und dem Presstisch 4 hindurch ziehen. Bevorzugterweise sind diese Transportmittel für den Bandvorschub über eine Mechanik derart an den Stempel 1 angekoppelt, dass ein Zubewegen des Stempels 1 auf den Presstisch 4 einen Transport des Filterbandes 7a um eine Strecke, welche mindestens so gross ist wie der Durchmesser der Kopffläche 12 des Stempels 1, zur Folge hat. In Fig. 2 sind die wesentlichen Teile dieser Transportmittel und der Mechanik, wie sie in dem ersten Ausführungsbeispiel realisiert sind, schematisch dargestellt. Die Transportmittel für den Bandvorschub umfassen die Gegendruckrolle 92 sowie die Transportrolle 91. Die drehbar gelagerte Gegendruckrolle 92 drückt das Filterband 7a gegen die Transportrolle 91, so dass dieses zwischen der Gegendruck- 92 und der Transportrolle 91 eingeklemmt ist. Auf der Achse der Transportrolle 91 und mit dieser fest verbunden ist ein Kinkenrad 911 vorgesehen, so dass eine Drehung des Kinkenrades 911 eine Rotation der Transportrolle 91 und damit einen Transport des Filterbandes 7a in Richtung der Pfeile T (Fig. 2) zur Folge hat. Das Kinkenrad 911 weist vier Kinken 912 auf, welche zueinander in etwa den gleichen Abstand haben. An der Wandung des Stempels 1 ist ein Hebelarm 19 angebracht, welcher fest mit dem Stempel 1 verbunden ist, und der sich etwa rechtwinklig zur Längsachse des Stempels 1 in Richtung des Kinkenrades 911 auf der Achse des Transportrades 91 erstreckt. Beispielsweise kann in der Wandung des Stempels 1 eine nutförmige Ausnehmung vorgesehen sein, welche den Hebelarm 19 aufnimmt, und in welcher der Hebelarm 19 durch nicht dargestellte Befestigungsmittel relativ zu dem Stempel 1 fixiert ist. An dem Kinkenrad 911 zugewandten Ende des Hebelarms 19 ist eine Aussparung 192 vorgesehen, die mit ihrem offenen Ende in Richtung des Kinkenrades 911 weist. Die Aussparung 192 nimmt einen Vorschubhebel 191 auf, welcher in der Aussparung 192 derart auf einem Stift 193 gelagert ist, dass der Vorschubhebel 191 in der Aussparung 192 in Richtung des Pfeils D hin- und herkippbar ist. An seinem dem Kinkenrad 911 zugewandten Ende ist der Vorschubhebel 191 abgeschrägt.

In Fig. 2 befindet sich der Stempel 1 ungefähr in seiner bezüglich dieser Darstellung tiefsten Stellung. Dabei befindet sich das abgeschrägte Ende des Vorschubhebels 191 unterhalb einer der Kinken 912 des Kinkenrades 911. Bewegt sich nun der Stempel 1 auf den Presstisch 4 zu, also in Fig. 2 nach oben, so bewegt sich auch der Hebelarm 19 nach oben. Dabei kommt das abgeschrägte Ende des Vorschubhebels 191 mit einer der Kinken 912 in Eingriff und dreht beim weiteren Anheben des Stempels 1 das Kinkenrad 911 weiter. Dadurch drehen sich auch die Transportrolle 91 sowie die Gegendruckrolle 92, und zwar gegensinnig zueinander. Somit erfolgt ein Transport des Filterbandes 7a in Richtung der Pfeile T. Wenn sich die mit den Vorschubhebel 191 in Eingriff stehende Kinke 912 ihrem oberen Umkehrpunkt nähert, so rutscht das abgeschrägte Ende des Vorschubhebels 191 von der Kinke 912 ab und ein weiteres Heben des Stempels 1 hat keinen Bandtransport des Filterbandes 7a mehr zur Folge. Bewegt sich der Stempel 1 bezüglich der Darstellung in Fig. 2 nach unten, so senkt sich auch der Hebelarm 19 und mit ihm der Vorschubhebel 191.
Kontaktiert der Vorschubhebel 191 von oben kommend die nächste Kinke 912, so rutscht er, weil er kippbar gelagert ist, über diese Kinke ab und kommt in der Folge unterhalb dieser Kinke zu liegen. Nun kann der Bandvorschub wieder von vorne beginnen. Die Grösse der Strecke, um die das Filterband 7a bei einem Hub des Stempels 1 transportiert wird, ist durch den Abstand der Kinken 912 auf dem Kinkenrad 911, bzw. durch ihre Anzahl, oder durch den Durchmesser der Transportrolle 91 kontrollierbar. Bevorzugt erfolgt mit einem Hub des Stempels 1 ein Bandtransport um eine Strecke, die mindestens so gross ist, wie der Durchmesser der Kopffläche 12 des Stempels 1. Dadurch ist gewährleistet, dass sich nach dem Hub des Stempels 1 stets bis dahin unbenutztes Filtermittel 7 zwischen der Kopffläche 12 des Stempels 1 und der Auflagefläche 42 des Presstisches 4 befindet. Ferner sind die Höhe, auf welcher der Hebelarm 19 an dem Stempel 1 angebracht ist, die Länge des Vorschubhebels 191 und der gegenseitige Abstand der Kinken 912 des Kinkenrades 911 derart aufeinander abgestimmt, dass beim Hub des Stempels 1 das abgeschrägte Ende des Vorschubhebels 191 dann von der mit ihm im Eingriff befindlichen Kinke 912 abrutscht, wenn der Stempel 1 das Filterband 7a erfasst. Sobald also der Stempel 1 das Filterband 7a mit seiner Druckkante 15 erfasst, rutscht der Vorschubhebel 191 von der Kinke 912 ab, die Transportrolle 91 ist von der Bewegung des Stempels 1 entkoppelt, und der Transport des Filterbandes 7a wird gestoppt.

Dieser Transportmechanismus für das Filterband 7a ist von seiner Konstruktion her sehr einfach und robust. Da für den Bandvorschub die Bewegung des Stempels 1 ausgenutzt wird, sind keine Motoren oder sonstige weiteren Antriebsmittel für den Bandvorschub vonnöten, wodurch sich der konstruktive Aufwand reduziert. Besonders vorteilhaft ist die vollkommen mechanische Ausgestaltung des Bandvorschubs, weil hierdurch im Unterschied zu elektrischen Antriebsmitteln keine Gefahr von Funkenbildung besteht, und somit die Filtervorrichtung auch in explosionsgefährdeten Bereichen problemlos einsetzbar ist.
In dem in den Figuren 1 und 2 dargestellten ersten Ausführungsbeispiel drückt der Stempel 1 von unten gegen die Auflagefläche 42 des Presstisches 4. Es sind natürlich auch solche Ausgestaltungen möglich, bei denen der Stempel 1 von oben gegen die Auflagefläche 42 des Presstisches 4 drückt.

Im folgenden wird nun die Funktionsweise der erfindungsgemässen Filtervorrichtung anhand des ersten Ausführungsbeispiels erläutert. Der Stempel 1 befindet sich in seiner bezüglich der Darstellung in Fig. 2 tiefsten Stellung und das Filterband 7a erstreckt sich frei zwischen der Auflagefläche 42 des Presstisches 4 und der Kopffläche 12 des Stempels 1 hindurch. Nun erfolgt, beispielsweise durch Druckluftbeaufschlagung, ein Hub des Zylinders 81. Dadurch bewegt sich der mit dem Zylinder 81 fest verbundene Stempel 1 in Richtung der Auflagefläche 42 des Presstisches 4. Durch diese Bewegung erfolgt gleichzeitig, wie vorne beschrieben, ein Bandvorschub des Filterbandes 7a um eine Strecke, die mindestens so gross ist, wie der Durchmesser der Kopffläche 12 des Stempels 1. Wenn die Druckkante 15 des Stempels 1 das Filterband 7a erfasst, hat sich das Kinkenrad 911 so weit gedreht, dass der Vorschubhebel 191 von der mit ihm im Eingriff befindlichen Kinke 912 abrutscht, so dass keine weitere Rotation der Transportrolle 91 erfolgt und das Filterband 7a zum Stillstand kommt. Die Bewegungen des Stempels 1 und der Transportrolle 91 sind nun entkoppelt. Der Stempel bewegt sich weiter auf die Auflagefläche 42 zu und klemmt das Filterband 7a zwischen seiner Druckkante 15 und der Auflagefläche 42 des Presstisches 4 ein. Ferner liegen die Mündung 442 des Abführkanals 44 und die Sammelrinnen 421,422 in der Auflagefläche 42 des Presstisches 4 spiegelsymmetrisch bezüglich des Filterbandes 7a zu der Mündung 142 des Zuführkanals 14 und den Verteilerrinnen 121,122 in der Kopffläche 12 des Stempels 1. D. h., der Mündung 442 des Abführkanals 44 auf der einen Seite des Filterbandes 7a liegt die Mündung 142 des Zuführkanals 14 auf der anderen Seite des Filterbandes 7a gegenüber. Ebenso liegt jeder der radialen Sammelrinnen 421 und jeder der zweiten Zwischenrinnen 422 auf der einen Seite des Filterbandes 7a jeweils eine der radialen Verteilerrinnen 121 bzw. eine der ersten Zwischenrinnen 122 auf der anderen Seite des Filterbandes 7a gegenüber.

Unter dem Druck des Stempels 1 erfolgt nun die Sinterung des Filtermittels an dem Rand desjenigen kreisförmigen Bereiches des Filterbandes 7a, der sich zwischen dem Stempel 1 und der Auflagefläche des Presstisches 4 befindet, also dort, wo das Filterband 7a zwischen der Druckkante 15 des Stempels 1 und der Auflagefläche 42 des Presstisches 4 eingeklemmt ist. Dadurch wird auf dem Filterband 7a ein runder Filterbereich erzeugt, der sich zwischen dem Stempel 1 und dem Presstisch 4 befindet, und entlang dessen geschlossener Begrenzungslinie das Filterband 7a stark verdichtet ist. Im Innern dieses Bereiches erfolgt keine Manipulation des Filterbandes 7a. Beispielsweise kann der Durchmesser der Kopffläche 12 des Stempels 1 einen Durchmesser von 20 mm haben und das dem Filterband zugewandte Ende 151 der Druckkante 15 mit einem Krümmungsradius von 0,05 mm abgerundet sein. Bei einem Durchmesser des Zylinders 81 von beispielsweise 100 mm reicht dann eine Druckluftbeaufschlagung des Zylinders mit 4 bar (400 kPa) aus, um mit der Druckkante 15 einen für die Sinterung ausreichend grossen Druck auf das Filterband 7a auszuüben.

Nachdem auf diese Weise das Filterband 7a zwischen der Druckkante 15 und der Auflagefläche 42 abgedichtet ist, erfolgt das Aufbringen der zu filternden Probe auf den zwischen dem Stempel 1 und der Auflagefläche 42 befindlichen Bereich des Filterbandes 7a. Die Probe kann beispielsweise mittels einer nicht dargestellten Pumpe durch die Filtervorrichtung gepumpt werden. Natürlich ist es auch möglich, die Probe, z. B. mittels Druckluft durch die Filtervorrichtung zu drücken. Die Einspeisung der zu filternden Probe erfolgt durch den Zuführschlauch 111. Die zu filternde Probe gelangt durch den Zuführkanal 14 und dessen Mündung 142 in die Verteilerrinnen 121 und 122 in der Kopffläche 12 des Stempels 1. Die Probe verteilt sich dann in den radialen Verteilerrinnen 121 und in den ersten Zwischenrinnen 122. In der Folge tritt die zu filternde Probe in den zwischen dem Stempel 1 und der Auflagefläche 42 befindlichen Bereich des Filterbandes 7a ein. Dieser hält die in der Probe enthaltenen ungelösten Bestandteile zurück, wodurch sich in und auf dem Filterband 7a der Filterkuchen bildet. Durch die Abdichtung des Filterbereiches zwischen dem Stempel 1 und der Auflagefläche 42 wird ein unerwünschtes Querfliessen der Probe auf und in dem Filterband 7a unterbunden. Die Probe kontaktiert im wesentlichen nur diesen genannten Filterbereich und kann ihn weder durch Querfluss auf dem Filterband 7a noch durch Querfluss in dem Filterband 7a in unkontrollierter Weise verlassen. Nach Passieren des Filterbandes 7a gelangt das nun aus der Probe erzeugte Filtrat in die Sammelrinnen 421, 422 und fliesst durch die Mündung 442 und den Abführkanal 44 in den Abführschlauch 411, an dessen Ende es dann für weitere Verwendungszwecke, z. B. analytische Untersuchungen, zur Verfügung steht.

Optional ist es möglich, nach dem Passieren der Probe durch das Filterband 7a, Druckluft in den Zuführkanal 14 einzuspeisen. Diese Druckluft drückt Reste der Probe, welche sich beispielsweise noch in den Verteilerrinnen 121, 122 befinden können, durch das Filterband 7a. Die Druckluft drückt ebenfalls Reste des Filtrats, welche sich noch in den Sammelrinnen 421 und 422 befinden können, durch die Mündung 442 und den Abführkanal 44. Somit ist es gewährleistet, dass das Filtrat möglichst vollständig am Ende des Abführschlauches 411 zur Verfügung steht und praktisch keine Filtratverluste durch Rückstände in den Sammelrinnen 421 und 422 bzw. im Abführkanal 44 auftreten. Dies ist vorteilhaft unter dem Aspekt einer optimalen Ausnutzung der zu filternden Probe. Je geringer nämlich die Probenverluste bzw. die Filtratverluste beim Passieren der Filtervorrichtung sind, um so kleiner sind die Probenmengen, die der Filtervorrichtung zugeführt werden müssen, um eine benötigte Menge und Qualität des Filtrats bzw. des Filterkuchens zu erzielen.

Bei vielen Anwendungen von Filtervorrichtungen kommt es vor, dass nicht nur das Filtrat sondern auch der Filterkuchen, also die in und auf dem Filterband zurückgehaltenen ungelösten Bestandteile, von analytischem oder anwendungstechnischem Interesse ist. Oft ist es der Filterkuchen, dem das eigentliche Interesse zukommt, und das Filtrat stellt lediglich ein Abfallprodukt dar. Insbesondere für einen kontinuierlichen Filtrationsbetrieb ist es daher wünschenswert, den Filterkuchen nach einer Filtration von dem Filtermittel entfernen zu können, ohne dafür das Filtermittel aus der Filtervorrichtung entfernen zu müssen. Auch dies ist beispielsweise bei dem ersten Ausführungsbeispiel der erfindungsgemässen Filtervorrichtung möglich. Dazu wird, nachdem das Filtrat die Filtervorrichtung verlassen hat, eine an die Grösse des Filterkuchens angepasste Menge eines Lösungsmittels, beispielsweise eines Lysatpuffers, durch den Zuführkanal 14 in die Verteilerrinnen 121 und 122 eingebracht und beispielsweise mittels Druckluft durch das Filterband 7a gedrückt. Dadurch wird der Filterkuchen aufgeschwemmt und chemisch gelöst, teilweise gelöst oder eluiert. Wenn sich der nun in gelöster Form vorliegende Filterkuchen in den Sammelrinnen 421,422 und dem Abführkanal 44 befindet, kann die Druckluftzufuhr in den Zuführkanal 14 gestoppt werden und durch die Austrittsöffnung 441 Druckluft in den Abführkanal 44 eingespeist werden. Dadurch wird die Lösung aus Lösungsmittel und Filterkuchen durch das Filterband 7a zurückgedrückt und gelangt in die Verteilerrinnen 121,122 und in den Zuführkanal 14. Durch diesen Vorgang werden Reste des Filterkuchens in und auf dem Filterband 7a aufgeschwemmt und die chemische Lösekraft des Lösungsmittels wirkt nochmals auf das Filterband 7a bzw. auf die Reste des Filterkuchens. Diese Prozedur, abwechselnd den Zuführkanal 14 und den Abführkanal 44 mit Druckluft zu beaufschlagen, kann solange wiederholt werden bis der gewünschte Extraktionsgrad der ungelösten Bestandteile, welche bei der Filtration in und auf dem Filterband 7a zurückgehaltenen worden sind, erreicht ist. Abschliessend wird dann die Lösung aus Filterkuchen und Lösungsmittel mittels Druckluft durch den Abführkanal 44 und den Abführschlauch 411 aus der Filtervorrichtung entfernt und steht für weitere Verwendungszwecke zur Verfügung.

Bevor nun ein weiterer Filtrationsvorgang begonnen wird, kann der noch zwischen dem Stempel 1 und der Auflagefläche 42 eingeklemmte Filterbereich, welcher ja von der Probe kontaktiert wurde und auf dem sich eventuell noch nicht gelöste Rückstände des Filterkuchens befinden, gereinigt und gegebenenfalls sterilisiert werden. Dies ist oft wünschenswert, um Kontaminationen der Umwelt zu verhindern. Auch ist es vorteilhaft, den Zuführkanal 14, die Verteilerrinnen 121,122, die Sammelrinnen 421,422 sowie den Abführkanal 44 von eventuell vorhandenen Rückständen zu reinigen bzw. zu sterilisieren, damit solche Rückstände die nachfolgenden Filtrationen nicht negativ beeinflussen. Diese Reinigung oder Sterilisation kann beispielsweise mittels einer chemischen Methode erfolgen, indem gasförmige oder flüssige Reinigungs- oder Sterilisationsmittel durch den Zuführkanal 14, die Verteilerrinnen 121,122, die Sammelrinnen 421,422 sowie den Abführkanal 44 bewegt werden, oder aber auch mittels heissem Dampf, der in analoger Weise durch die Filtervorrichtung geleitet wird. Anschliessend wird steriles Reinstwasser durch die Filtervorrichtung bewegt und dann der zwischen dem Stempel 1 und der Auflagefläche 42 eingeklemmte Bereich des Filterbandes 7a mittels Druckluft trockengeblasen.

Auch für die vorstehend beschriebene Lösung des Filterkuchens von dem Filterband 7a sowie für die Reinigung, Sterilisation und Trocknung des Filterbandes 7a sind die Verteilerrinnen 121,122 in der Kopffläche 12 des Stempels 1 und die Sammelrinnen 421,422 in der Auflagefläche 42 des Presstisches 4 sehr vorteilhaft, weil sich durch sie die Lösungs-, Reinigungs- und Sterilisationsmittel ebenso wie die zur Trocknung eingesetzte Druckluft gleichmässig über den gesamten zwischen dem Stempel 1 und dem Presstisch 4 eingeklemmten Bereich des Filterbandes 7a verteilen und diesen gleichmässig durchdringen, so dass die entsprechenden Vorgänge rasch und mit hoher Wirksamkeit durchführbar sind.

Nun wird durch Absenken des Zylinders 81 der Stempel 1 von der Auflagefläche 42 des Presstisches 4 weg bewegt, wodurch das Filterband 7a freigegeben wird. Die Filtervorrichtung ist jetzt für einen neuen Filtrationsvorgang bereit. Dieser beginnt wieder mit einem Hub des Zylinders 81, wodurch, wie vorne beschrieben, gleichzeitig ein Bandvorschub des Filterband 7a um eine Strecke erfolgt, die mindestens so gross ist wie der Durchmesser der Kopffläche 12 des Stempels 1. Somit ist sichergestellt, dass sich für den neuen Filtrationsvorgang ein bis dahin unbenutzter Teil des Filterbandes 7a zwischen dem Stempel 1 und der Auflagefläche 42 des Presstisches 4 befindet.

Auch wenn die erfindungsgemässe Filtervorrichtung bzw. das erfindungsgemässe Filterverfahren anhand eines Ausführungsbeispiels beschrieben sind, welches für einen kontinuierlichen Filtrationsbetrieb ausgelegt ist, so ist die Erfindung keinesfalls auf solche Ausgestaltungen beschränkt. Natürlich sind auch solche Ausführungsbeispiele möglich, bei denen das Filtermittel 7 andere Formen als die des Filterbandes 7a aufweist und z. B. von Hand zwischen dem Stempel 1 und dem Presstisch 4 plaziert wird.

In den Figuren 8, 9, 10 sind der Stempel 1a und der Presstisch 4a eines zweiten Ausführungsbeispiels der erfindungsgemässen Filtervorrichtung dargestellt. Fig. 8 zeigt einen Längsschnitt durch den Stempel 1a und Fig. 9 einen Querschnitt entlang der Linie IX-IX in Fig. 8. Die Blickrichtung für den Querschnitt ist in Fig. 8 durch die Pfeile an der Schnittlinie IX-IX dargestellt.

In diesem zweiten Ausführungsbeispiel umfasst der Stempel 1a eine Stempelbasis 16a und einen Stempelkopf 17a, die beide einen rechteckigen Querschnitt aufweisen, wie dies aus Fig. 9 für den Stempelkopf 17a ersichtlich ist. Der Stempelkopf 17a ist mechanisch fest mit der Stempelbasis 16a verbunden. Diese Verbindung kann beispielsweise mittels Schrauben 179a erfolgen wie dies in Fig. 9 dargestellt ist.

Die Kopffläche 12a ist bei diesem Ausführungsbeispiel ebenfalls im wesentlichen kreisförmig ausgestaltet und weist einen Durchmesser von bis zu 100 mm, insbesondere von 10 mm bis 30 mm, auf. Die Druckkante 15a begrenzt die Kopffläche 12a. Im Vergleich zum ersten Ausführungsbeispiel ragt die Druckkante 15a bei dem zweiten Ausführungsbeispiel weiter über die Kopffläche 12a hinaus, so dass beim Anpressen des Stempels 1a gegen das Filterband 7a zwischen der Kopffläche 12a, dem Filterband 7a und der Druckkante 15a ein vergleichsweise grösserer, im wesentlichen zylinderförmiger Hohlraum 125a entsteht. Die Druckkante 15a ist an ihrem im Betriebszustand dem Filterband 7a zugewandten Ende 151a spitzwinklig abgeschrägt wie dies in Fig. 8 dargestellt ist. Bei dem zweiten Ausführungsbeispiel ist die Druckkante 15a nach aussen bezüglich des Stempels 1a abgeschrägt. Dadurch entsteht das relativ scharfes Ende 151a der Druckkante 15a, welches dem Filterband 7a zugewandt ist und im Betriebszustand das Filterband 7a gegen den Presstisch 4a drückt und sintert. Seitlich an die Druckkante 15a angesetzt, befindet sich ein Stutzen 172a, der in seinem Innern mit einer Bohrung versehen ist. Diese Bohrung erstreckt sich weiter durch die Druckkante 15a hindurch und mündet in den Hohlraum 125a. Die Bohrung dient als Auslasskanal 171a, durch welchen Substanzen aus dem Hohlraum 125a abgeführt werden können. Die Funktion des Auslasskanals 171a wird weiter hinten erläutert.

In seiner der Stempelbasis 16a zugewandten Begrenzungsfläche weist der Stempelkopf 17a eine ringförmige Ausnehmung auf, welche zusammen mit der ihr zugewandten Begrenzungsfläche der Stempelbasis 16a einen Ringkanal 176a bildet. Von dem Ringkanal 176a erstrecken sich Bohrungen, die als Spüldüsen 175a ausgestaltet sind, bis in die Kopffläche 12a. Wie aus Fig. 9 ersichtlich, sind die Spüldüsen 175a - bei diesem Ausführungsbeispiel acht Stück - auf zwei konzentrischen Kreislinien äquidistant angeordnet. Weiterhin ist ein Einlasskanal 173a vorgesehen, der sich von dem Ringkanal 176a radial nach aussen und durch einen seitlich an den Stempelkopf 17a angesetzten zweiten Stutzen 174a erstreckt. Durch diesen Einlasskanal 173a können Flüssigkeiten oder Gase von aussen in den Ringkanal 176a eingespeist werden. Der Ringkanal 176a speist die Spüldüsen 175a, welche zur Besprühung des Filterbandes 7a dienen.

Der Zuführkanal 14a für die Probe ist als Bohrung im Innern des Stempels 1a ausgestaltet und erstreckt sich von der Einlassöffnung141a, welche an der seitlichen Wandung der Stempelbasis 16a angebracht ist, bis zu seiner Mündung 142a in der Kopffläche 12a des Stempels 1a. Optional kann die Einlassöffnung 141a, wie bereits bei dem ersten Ausführungsbeispiel erwähnt, mit einem Gewinde 143a versehen sein, welches das Ende des Zuführschlauches aufnimmt. Die Mündung 142a des Zuführkanals 14a befindet sich etwa im Mittelpunkt der Kopffläche 12a.

Die dem Stempelkopf 17a zugewandte Begrenzungsfläche der Stempelbasis 16a ist mit zwei ringförmigen, konzentrischen Nuten versehen, welche jeweils einen O-Ring 161a oder ähnliche Dichtungsmittel aufnehmen. Die Nuten sind derart angeordnet, dass sich derjenige Teil der Begrenzungsfläche der Stempelbasis 16a zwischen den beiden O-Ringen 161a befindet, der nach dem Zusammenfügen der Stempelbasis 16a und des Stempelkopfes 17a die Abdeckung des Ringkanals 176a bildet. Auf diese Weise dienen die O-Ringe 161a der Abdichtung des Ringkanals 176a. Sie verhindern ein Austreten von Flüssigkeiten oder Gasen, welche sich in dem Ringkanal 176a befinden, an der Grenzfläche zwischen der Stempelbasis 16a und dem Stempelkopf 17a.

In seiner dem Stempelkopf 17a abgewandten Begrenzungsfläche weist die Stempelbasis 16a eine Gewindebohrung 13a auf. Diese nimmt eine nicht dargestellte Schraube auf, mittels derer der Stempel 1a mechanisch fest mit seiner Antriebsvorrichtung, wie beispielsweise dem in Fig. 2 angedeuteten Zylinder 81, verbunden ist.

Fig. 10 zeigt einen Schnitt durch den Presstisch 4a des zweiten Ausführungsbeispiels, wobei der Schnitt analog zu Fig. 7 gelegt ist. Zur besseren Orientierung ist das Filterband 7a ebenfalls angedeutet. Die Auflagefläche 42a des Presstisches 4a weist bei diesem Ausführungsbeispiel eine Kavität 46a auf, die ein etwa kreisförmiges Loch in der Auflagefläche 42a bildet. Zum Innern des Presstisches 4a hin verläuft die Wandung der Kavität 46a zunächst rechtwinklig zur Auflagefläche 42a. Anschliessend verjüngt sich die Kavität kegelförmig, so dass sie im Ganzen in etwa die Form eines Zylinders mit aufgesetztem Kegel aufweist, wobei die Spitze des Kegels am weitesten von der Auflagefläche 42a entfernt ist. Der Durchmesser der Kavität 46a in der Auflagefläche 42a ist kleiner als der Durchmesser der Kopffläche 12a des Stempels 1a, so dass die Druckkante 15a im Betriebszustand das Filterband 7a ausserhalb der Kavität 46a gegen die Auflagefläche 42a des Presstisches 4a drückt und dort sintert. Dies ist in Fig. 10 symbolisch durch die Druckkante 15a dargestellt.

Der Abführkanal 44a ist als Bohrung im Innern des Presstisches 4a ausgestaltet und erstreckt sich von der Austrittsöffnung 441a für das Filtrat, welche in der seitlichen Wandung des Presstisches 4a vorgesehen ist, bis zu seiner Mündung 442a in die Kavität 46a. Die Mündung 442a liegt in der Nähe der Spitze des kegelförmigen Teils der Kavität 46a. Zusätzlich sind zwei weitere Kanäle 47a und 48a vorgesehen, die sich jeweils von der seitlichen Wandung des Presstisches 4a durch diesen hindurch erstrecken und in die Kavität 46a einmünden. Der erste Kanal 47a mündet in den zylinderförmigen Teil der Kavität 46a, der zweite Kanal 48a in den Übergangsbereich von dem zylinderförmigen in den kegelförmigen Bereich der Kavität 46a. Optional können die Austrittsöffnung 441a des Abführkanals 44a und die Austrittsöffnungen der beiden anderen Kanäle 47a, 48a in der seitlichen Wandung des Presstisches 4a jeweils, wie in Fig. 10 dargestellt, mit einem Gewinde 443a, 473a bzw. 483a versehen sein, die das Ende von nicht dargestellten Schläuchen aufnehmen können.

Die übrigen Elemente des zweiten Ausführungsbeispiels der erfindungsgemässen Filtervorrichtung, wie beispielsweise die Transportmittel für den Filterbandvorschub, die hier nicht weiter erläutert sind, können z. B. in analoger Weise wie bei dem ersten Ausführungsbeispiel ausgestaltet sein. Bei der nun folgenden Funktionsbeschreibung für das zweite Ausführungsbeispiel liegt der Schwerpunkt auf den Unterschieden zum ersten Ausführungsbeispiel. Es versteht sich, dass die vorstehenden Erklärungen für das erste Ausführungsbeispiel sinngemäss auch für das zweite Ausführungsbeispiel Geltung haben.

Das zweite Ausführungsbeispiel der erfindungsgemässen Filtervorrichtung eignet sich aufgrund des Hohlraums 125a im Stempelkopf 17a insbesondere für solche Anwendungen, bei denen sich ein Filterkuchen grösseren Volumens auf dem Bandfilter 7a bilden soll. Wie bei dem ersten Ausführungsbeispiel im Detail erläutert, bewegt sich zunächst der Stempel 1a auf den Presstisch 4a zu, erfasst mit der Druckkante 15a das Filterband 7a und drückt es gegen die Auflagefläche 42a des Presstisches 4a. Unter dem Druck des Stempels 1a erfolgt nun die Sinterung des Filtermittels 7a an dem Rand desjenigen kreisförmigen Bereiches des Filterbandes 7a, der sich zwischen dem Stempel 1a und der Auflagefläche 42a des Presstisches 4a befindet, also dort, wo das Filterband 7a zwischen der Druckkante 15a des Stempels 1a und der Auflagefläche 42a des Presstisches 4a eingeklemmt ist. Nach dieser Abdichtung des Filterbandes 7a erfolgt das Einspeisen der Probe. Diese wird durch den Zuführkanal 14a und dessen Mündung 142a in den Hohlraum 125a gepumpt oder gedrückt und gelangt so auf den zwischen der Druckkante 15a und der Auflagefläche 42a eingeklemmten Bereich des Filterbandes 7a. Bevorzugt ist der Stempel in einer derartigen Orientierung montiert, dass die Schwerkraft die Bewegung der Probe von der Mündung 142a durch das Filterband 7a unterstützt. Das Filtrat sammelt sich zunächst im kegelförmigen Teil der Kavität 46a im Presstisch 4a und kann nun durch den Abführkanal 44a, beispielsweise durch Druckluftbeaufschlagung abgeführt werden und steht somit für weitere Verwendungszwecke zur Verfügung. Soll nun der Filterkuchen gelöst werden, so kann dies in analoger Weise wie bei dem ersten Ausführungsbeispiel, z. B. mittels eines Lysatpuffers erfolgen.

Die Reinigung bzw. die Sterilisation des Filterbandes 7a erfolgt bei dem zweiten Ausführungsbeispiel indem das Reinigungs- oder Sterilisationsmittel durch den Einlasskanal 173a in den Ringkanal 176a gedrückt oder gepumpt wird. Das Reinigungs- oder Sterilisationsmittel verteilt sich in dem Ringkanal 176a und gelangt durch die Spüldüsen 175a auf das Filterband 7a sowie an die Innenseite der Druckkante 15a und auf die Kopffläche 12a und kann dort seine Wirkung entfalten. Durch die Anordnung der Spüldüsen 175a ist sichergestellt, dass das Reinigungs- oder Sterilisationsmittel den gesamten von der Probe kontaktierte Bereich des Filterbandes 7a erreicht. Eventuell auf dem Filterband 7a vorhandene Rückstände werden aufgeschwemmt bzw. chemisch gelöst. Die Abführung des Reinigungs- oder Sterilisationsmittels mit den darin enthaltenen Rückständen erfolgt durch den Auslasskanal 171a. Die Reinigung oder Sterilisation der Kavität 46a im Presstisch 4a erfolgt in analoger Weise, indem das Reinigungs- oder Sterilisationsmittel durch den zweiten Kanal 48a in die Kavität 46a eingebracht wird, dort seine Wirkung entfaltet und dann zusammen mit den Rückständen durch den ersten Kanal 47a abgeführt wird. Als Reinigungs- und Sterilisationsmittel eignen sich an sich bekannte Substanzen, wie beispielsweise gasförmiges Ethylenoxid, Natriumhypochloritlösung oder Natronlauge. Natürlich ist es auch möglich, zur Sterilisation gespannten Dampf zu verwenden. In der Regel erfolgt abschliessend eine Spülung mit sterilem Reinstwasser sowie eine Trocknung des Filterbandes 7a, z. B. mittels Druckluft, die auf dem gleichen Wege wie die Reinigungs- und Sterilisationsmittel durch die Filtervorrichtung geführt wird.

Natürlich eignet sich das zweite Ausführungsbeispiel in analoger Weise, wie für das erste beschrieben wurde für einen kontinuierlichen Filtrationsbetrieb.

Durch das erfindungsgemässe zumindest partielle Sintern des Filtermittels 7 kontaktiert die zu filternden Probe das Filtermittel 7 nur in einem genau definierten Bereich 7 und kann diesen weder durch Querfliessen auf dem Filtermittel 7 noch durch Querfliessen in dem Filtermittel 7 in unkontrollierter Weise verlassen. Daraus resultiert eine sehr effiziente Nutzung der zu filternden Probe, so dass sich die erfindungsgemässe Filtervorrichtung und das erfindungsgemässe Filtrationsverfahren auch für die Filtration sehr kleiner Probenmengen eignen, ohne dass darunter die Qualität des Filtrats oder des Filterkuchens leidet. Dies ist beispielsweise dann sehr vorteilhaft, wenn aus einem laufenden Prozess eine zu filternde Probe entnommen werden soll, ohne diesen Prozess signifikant zu beeinflussen, denn je kleiner die entnommene Probe ist, um so weniger wird der laufende Prozess gestört.

Besonders beim Arbeiten mit toxischen oder in anderer Weise gefährlichen Proben resultiert durch die Unterbindung des Querflusses der Probe und damit des unkontrollierten Austretens der Probe, eine deutliche Erhöhung der Betriebssicherheit für Mensch und Umwelt. Da die erfindungsgemässe Filtervorrichtung zudem voll sterilisierbar ist, genügt sie auch den Sicherheitsanforderungen in pharmazeutischen, medizinisch-diagnostischen und biotechnologischen Anwendungsgebieten. Da die erfindungsgemässe Filtervorrichtung vollkommen mechanisch ausgestaltet sein kann, eignet sie sich auch für den Einsatz in explosionsgefährdeten Bereichen.

In nicht abschliessender Aufzählung werden nun noch einige Anwendungsgebiete für erfindungsgemässe Filtervorrichtung bzw. das erfindungsgemässe Filtrationsverfahren genannt

Die erfindungsgemässe Filtervorrichtung bzw. das erfindungsgemässen Filtrationsverfahren eignen sich beispielsweise für die on-line Untersuchung zellinterner Stoffe. Dazu wird einem laufenden Prozess eine Probe entnommen, typischerweise in Form einer Zellsuspension.

Diese wird der Filtervorrichtung zugeführt. Die Zellen werden von dem Filtermittel zurückgehalten. Nach dem Abführen des Filtrats werden die auf dem Filtermittel befindlichen Zellen mittels eines Lysatpuffers geöffnet und die interessierenden zellinternen Stoffe gelöst. Diese Lösung wird dann wie vorne beschrieben aus der Filtervorrichtung abgeführt und steht für analytische Untersuchungen zur Verfügung. Aufgrund des erfindungsgemässen Abdichten des Filtermittels können solche Filtrationen mit einem sehr hohen Mass an biologischer Sicherheit durchgeführt werden, da ein unkontrolliertes Austreten der Probe, des Filtrats oder der Zellen wirkungsvoll unterbunden wird und die von der Probe kontaktierten Bereiche der Filtervorrichtung zudem voll sterilisierbar sind. Besonders vorteilhaft ist es, dass solche Filtrationen kontinuierlich durchführbar sind und sich mithin auch zur Prozessüberwachung oder -regulierung eignen.

Es versteht sich, dass die Filtrationen auch off-line durchgeführt werden können.

Ein weiteres Anwendungsgebiet sind Analysen in der Abwassertechnik. Auch eignet sich die erfindungsgemässe Filtervorrichtung für die Immobilisierung von Zellkulturen zur Herstellung biologischer Teststreifen sowie für die Immobilisierung von Enzymen oder anderen Substraten. Dazu kann der Filterkuchen oder Bestandteile von ihm nach der Filtration durch Bindemittel fixiert werden.

Auch in der medizinischen Diagnostik kann die erfindungsgemässe Filtervorrichtung bzw. das Verfahren eingesetzt werden beispielsweise für on-line oder off-line Blutuntersuchungen, z. B. während Operationen. Ferner können Untersuchungen an Lebensmitteln durchgeführt werden.

Nützlich ist die Erfindung auch für viele Analyseverfahrenstechniken wie beispielsweise Partikelfraktionierung, Festphasenextraktion, Permeation, Pervaporation, Gassensorik und -chromatographie, Rauchpartikelanalyse, Bestimmung von Benetzungskoeffizienten und Abgasuntersuchungen. Durch den Verzicht auf elektrische Betriebsteile eignet sich die Filtervorrichtung auch für Probenentnahmen in explosionsgefährdeten Bereichen.

Ferner eignet sich die Erfindung zur Untersuchung von Rezeptor-Ligand-Bindungen, wie sie häufig in der Pharmazie, der Biologie, der Umwelttechnik und der Medizintechnik durchgeführt werden.

## Patentansprüche

1. Filtervorrichtung (10) zur Trennung von ungelösten Bestandteilen aus einer fliessfähigen Probe, welche Vorrichtung durch Zurückhalten der ungelösten Bestandteile aus der Probe ein Filtrat erzeugt, mit einer Probenzuführung, durch welche die Probe auf ein Filtermittel (7;7a) gelangt, mit einer Filtratabführung, mit einem fest montierten ersten Filterzellenteil und einem bewegbaren zweiten Filterzellenteil, zwischen denen sich im Betriebszustand das Filtermittel (7;7a) befindet, dadurch gekennzeichnet, dass das erste Filterzellenteil als Presstisch (4;4a) mit einer Auflagefläche (42;42a) für das Filtermittel (7;7a) ausgestaltet ist und das zweite Filterzellenteil als Stempel (1;1a), der das Filtermittel (7;7a) vor der Kontaktierung durch die Probe gegen den Presstisch (4;4a) drückt und dabei das Filtermittel (7;7a) an der Berührungsfläche zwischen dem Stempel (1;1a), dem Filtermittel (7;7a) und dem Presstisch (4;4a) zumindest partiell sintert.

2. Filtervorrichtung nach Anspruch 1, dadurch gekennzeichnet, dass der Stempel (1;1a) auf seiner dem Filtermittel (7;7a) zugewandten Seite eine Kopffläche (12;12a) aufweist, die durch eine Druckkante (15;15a) begrenzt ist, welche derart über die Kopffläche (12;12a) hinausragt, dass beim Andrücken des Stempels (1;1a) gegen das Filtermittel (7;7a) im wesentlichen nur die Druckkante (15;15a) des Stempels das Filtermittel (7;7a) gegen den Presstisch (4;4a) drückt.

3. Filtervorrichtung nach Anspruch 2, dadurch gekennzeichnet, dass die Druckkante (15;15a) an ihrem im Betriebszustand dem Filtermittel (7;7a) zugewandten Ende (151;151a) spitzwinklig abgeschrägt ist.

4. Filtervorrichtung nach einem der vorangehenden Ansprüche, dadurch gekennzeichnet, dass die Probenzuführung einen Zuführkanal (14;14a) umfasst, welcher als Bohrung im Innern des Stempels (1;1a) ausgestaltet ist, und welcher sich von einer Einlassöffnung (141;141a) für die Probe bis zu einer Mündung (142;142a) in der Kopffläche (12;12a) des Stempels (1 ;1a)erstreckt.

5. Filtervorrichtung nach einem der vorangehenden Ansprüche, dadurch gekennzeichnet, dass die Filtratabführung einen Abführkanal (44;44a) umfasst, welcher als Bohrung im Innern des Presstisches (4;4a) ausgestaltet ist, und welcher sich von einer Austrittsöffnung (441;441a) für das Filtrat bis zu einer Mündung (442;442a) in der Auflagefläche (42;42a) des Presstisches (4;4a) erstreckt.

6. Filtervorrichtung nach einem der Ansprüche 2-5, dadurch gekennzeichnet, dass die Kopffläche des Stempels (1) Verteilerrinnen (121,122) aufweist, welche mit der Mündung (142) des Zuführkanals (14) verbunden sind, so dass sich die zu filternde Probe in den Verteilerrinnen (121,122) verteilen kann.

7. Filtervorrichtung nach einem der vorangehenden Ansprüche, dadurch gekennzeichnet, dass die Auflagefläche (42) des Presstisches (4) Sammelrinnen (421,422) aufweist, welche mit der Mündung (442) des Abführkanals (44) verbunden sind, so dass das Filtrat aus den Sammelrinnen (421,422) in den Abführkanal (44) gelangen kann.

8. Filtervorrichtung nach einem der Ansprüche 2-5, dadurch gekennzeichnet, dass in der Kopffläche (12a) des Stempels (1a) Spüldüsen (175a) zum Besprühen des Filtermittels (7;7a) vorgesehen sind, und dass im Innern des Stempels (1a) ein Ringkanal (176a) zur Speisung der Spüldüsen vorgesehen ist.

9. Filtervorrichtung nach Anspruch 8, dadurch gekennzeichnet, dass der Presstisch (4a) eine Kavität (46a) aufweist, in welcher sich das Filtrat nach dem Passieren des Filtermittels (7;7a) sammelt.

10. Filtervorrichtung nach einem der Ansprüche 2-9, dadurch gekennzeichnet, dass die Kopffläche (12;12a) des Stempels (1;1a) im wesentlichen kreisförmig ausgestaltet ist.

11. Filtervorrichtung nach Anspruch 6 und 10, dadurch gekennzeichnet, dass sich die Mündung (142) des Zuführkanals (14) etwa im Mittelpunkt der Kopffläche (12) des Stempels (1) befindet, und dass die Verteilerrinnen (121,122) in der Kopffläche (12) des Stempels (1) sowohl radial verlaufende Verteilerrinnen (121) umfassen, welche sich von der Mündung (142) des Zuführkanals (14) nach aussen bis an die Druckkante (15) erstrecken, als auch konzentrisch zum Mittelpunkt angeordnete erste Zwischenrinnen (122), welche kreisbogenförmig ausgestaltet sind und die radial verlaufenden Verteilerrinnen (121) miteinander verbinden.

12. Filtervorrichtung nach Anspruch 11, dadurch gekennzeichnet, dass die Mündung (442) des Abführkanals (44) und die Sammelrinnen (421,422) in der Auflagefläche (42) des Presstisches (4) spiegelsymmetrisch zur Mündung (142) des Zuführkanals (14) beziehungsweise zu den Verteilerrinnen (121,122) angeordnet sind, so dass im Betriebszutand jeweils eine Sammelrinne (421,422) auf der einen Seite des Filtermittels (7;7a) einer Verteilerrinne (121,122) auf der anderen Seite des Filtermittels (7;7a) gegenüberliegt.

13. Filtervorrichtung nach einem der Ansprüche 10-12, dadurch gekennzeichnet, dass die Kopffläche (12;12a) des Stempels (1;1a) einen Durchmesser von bis zu 100 mm, insbesondere von 10mm bis 30mm, aufweist.

14. Filtervorrichtung nach einem der Ansprüche 6-7 oder 10-13, dadurch gekennzeichnet, dass die Verteilerrinnen (121,122) jeweils eine Breite (B1) und eine Tiefe (T1) von bis zu 2 mm, insbesondere von 0.8 mm bis 1.2 mm, aufweisen.

15. Filtervorrichtung nach einem der Ansprüche 3-14, dadurch gekennzeichnet, dass das dem Filtermittel (7;7a) zugewandte Ende (151;151a) der Druckkante (15;15a) des Stempels (1;1a) mit einem Krümmungsradius von bis zu 0.1 mm, insbesondere von 0.03 mm bis 0.07 mm, abgerundet ist.

16. Filtervorrichtung nach einem der vorangehenden Ansprüche, dadurch gekennzeichnet, dass ein antreibbarer Zylinder (81) vorgesehen ist, welcher den Stempel (1;1a) in Richtung auf den Presstisch (4;4a) zu und von diesem weg bewegt, so dass die Druckkante (15;15a) der Kopffläche (12;12a) des Stempels (1;1a) und die Auflagefläche (44;44a) des Presstisches (4;4a) das zwischen ihnen befindliche Filtermittel (7;7a) sowohl einklemmen und pressen, als auch freigeben können.

17. Filtervorrichtung nach Anspruch 16, dadurch gekennzeichnet, dass der Zylinder (81) mechanisch, insbesondere durch Druckluft, antreibbar ist.

18. Filtervorrichtung nach einem der vorangehenden Ansprüche, dadurch gekennzeichnet, dass das Filtermittel (7;7a) als Filterband (7a) ausgestaltet ist.

19. Filtervorrichtung nach Anspruch 18, dadurch gekennzeichnet, dass das Filterband (7a) auf einer Vorratsrolle (71) aufgewickelt ist und dass Transportmittel für den Bandvorschub vorgesehen sind, welche das Filterband (7a) von der Vorratsrolle (71) abwickeln und zwischen dem Stempel (1;1a) und dem Presstisch (4;4a) hindurch ziehen.

20. Filtervorrichtung nach Anspruch 19, dadurch gekennzeichnet, dass die Transportmittel für den Bandvorschub über eine Mechanik derart an den Stempel (1;1a) angekoppelt sind, dass ein Zubewegen des Stempels (1;1a) auf den Presstisch (4;4a) einen Transport des Filterbandes (7a) um eine Strecke, welche mindestens so gross ist wie der Durchmesser der Kopffläche (12;12a) des Stempels (1;1a), zur Folge hat.

21. Filtervorrichtung nach Anspruch 20, dadurch gekennzeichnet, dass Mittel vorgesehen sind, welche die Transportmittel für den Bandvorschub von der Bewegung des Stempels (1;1a) entkoppeln, wenn die Druckkante (15;15a) des Stempels (1;1a) das Filterband (7a) kontaktiert.

22. Filtrationsverfahren zur Trennung von ungelösten Bestandteilen aus einer fliessfähigen Probe, bei dem die fliessfähige Probe durch ein Filtermittel bewegt wird, durch welches die ungelösten Bestandteile zurückgehalten werden und somit ein Filtrat erzeugt wird, dadurch gekennzeichnet, dass das Filtermittel zumindest partiell gesintert wird unmittelbar bevor die zu filternde Probe auf das Filtermittel aufgebracht wird.

23. Filtrationsverfahren nach Anspruch 22, dadurch gekennzeichnet, dass auf dem Filtermittel ein Filterbereich erzeugt wird, entlang dessen geschlossener Begrenzungslinie das Filtermittel zumindest partiell gesintert ist.

24. Filtrationsverfahren nach einem der Ansprüche 22-23, dadurch gekennzeichnet, dass nach dem Passieren der Probe durch das Filtermittel Reste der Probe bzw. des Filtrats, mittels Druckluft entfernt werden.

25. Filtrationsverfahren nach einem der Ansprüche 22-24, dadurch gekennzeichnet, dass die von dem Filtermittel zurückgehaltenen ungelösten Bestandteile der fliessfähigen Probe mit Hilfe eines Lösungsmittels aufgeschwämmt und zumindest teilweise chemisch gelöst werden und in gelöster Form abgeführt werden.

26. Filtrationsverfahren nach Anspruch 25, dadurch gekennzeichnet, dass der von der Probe kontaktierte Filterbereich durch eine chemische Methode oder durch Sterilisation gereinigt wird und dann getrocknet wird.

27. Filtrationsverfahren nach einem der Ansprüche 22-26, dadurch gekennzeichnet, dass zumindest
ein Filterband als Filtermittel benutzt wird;
ein Stempel (1;1a) mit einer dem Filterband zugewandten Kopffläche (12;12a) gegen das Filterband bewegt wird;
das Filterband durch den als eine Druckkante ausgeprägten Rand der Kopffläche (12;12a) des Stempel (1;1a)s gegen eine Auflagefläche gepresst wird;
das Filterband an der Berührungsfläche mit der Druckkante bzw. mit der Auflagefläche zumindest partiell gesintert wird;
der Stempel (1;1a) anschliessend von dem Filterband weg bewegt wird, so dass das Filterband freigegeben wird;
der Stempel (1;1a) dann wieder auf das Filterband zubewegt wird und dabei gleichzeitig das Filterband um eine Strecke weitertransportiert wird, welche mindestens so gross ist wie der Durchmesser der Kopffläche (12;12a) des Stempels (1;1a);
das Filterband in der Folge wieder zwischen der Druckkante des Stempels (1;1a) und der Auflagefäche eingeklemmt wird,
so dass ein kontinuierliches Filtrationsverfahren ermöglicht wird.
